# EUROPEAN PATENT SPECIFICATION

(11) **EP 4 393 802 B1**
(45) Date of publication and mention of the grant of the patent: **27.08.2025**
(21) Application number: 21959140.1
(22) Date of filing: 13.12.2021
(51) Int. Cl.: B60B 7/00, B62M 7/12, B62K 11/10, B62L 1/00, B62K 25/28, B62K 19/38, B62K 19/28, B62K 19/20, B62J 50/21, B62J 45/41, B62J 43/16, B60K 7/00, B62J 11/19, B62J 17/00, B60L 50/64, B60L 53/16, B62H 5/06, B62J 9/30, B62J 9/14

(54) **ELECTRIC SCOOTER-TYPE MOTORCYCLE**
ELEKTRISCHES ROLLERMOTORRAD
MOTO DE TYPE SCOOTER ÉLECTRIQUE

(30) Priority: 29.09.2021 CN 202111156344
(43) Date of publication of application: 03.07.2024
(73) Proprietor: Zhejiang CFMOTO Power Co., Ltd., Hangzhou, Zhejiang 311100 (CN)
(72) Inventor: WU, Guohui, Hangzhou, Zhejiang 311100 (CN); JIANG, Hao, Hangzhou, Zhejiang 311100 (CN); WEI, Wei, Hangzhou, Zhejiang 311100 (CN); ZHAO, Ruiqi, Hangzhou, Zhejiang 311100 (CN); DENG, Rui, Hangzhou, Zhejiang 311100 (CN); ZHU, Jinlin, Hangzhou, Zhejiang 311100 (CN)
(74) Representative: Sun, Yiming
(86) International application number: PCT/CN2021/137390
(87) International publication number: WO 2023/050580

(56) References cited:
- CN-A- 1 301 227
- CN-A- 110 248 864
- CN-A- 111 433 116
- CN-U- 202 669 479
- JP-A- H1 134 965
- US-A1- 2013 175 102

## Description

### FIELD OF THE DISCLOSURE

The present disclosure relates to electric scooter-type motorcycles.

### BACKGROUND OF THE DISCLOSURE

Scooter-type motorcycles are highly favored by users due to their structure that can carry articles and large storage space. Electric scooter-type motorcycles have gradually developed due to the development of environmentally friendly concepts.

However, various issues which restrict the further development of electric scooters and also bring certain troubles to people's use inevitably exist in the existing electric scooter-type motorcycles.

A drive assembly for providing power for the electric scooter-type motorcycle to move forward is the most important part of the scooter-type motorcycle. However, the drive assembly on the existing scooter-type motorcycle has an un-compacted and complex structure and occupies a large space, which increases weight of the entire motorcycle and impairs user convenience.

US 2013/175102 A1 discloses an electric scooter-type motorcycle according to the preamble of claim 1.

### SUMMARY OF THE DISCLOSURE

The application provides an electric scooter-type motorcycle, which has a drive assembly having a compact structure, occupying small space, and achieving efficient driving.

The invention is defined by independent claim 1 and preferred embodiments are defined by dependent claims 2 to 15.

A scooter-type motorcycle substantially extending along a front-rear direction is disclosed. The scooter-type motorcycle includes a frame, a steering assembly, a lock assembly, a vehicle cover, a vehicle controller, a seat cushion assembly, a wheel assembly, a drive assembly, and a power battery. The steering assembly is at least partially connected to the frame. The lock assembly is at least partially mounted on the frame. The vehicle cover is at least partially connected to the frame. The vehicle controller is at least partially connected to the lock assembly. The seat cushion assembly is at least partially connected to the frame. The wheel assembly are at least partially connected to the frame and includes at least one front wheel and at least one rear wheel. The drive assembly is used for driving the wheel assembly, the drive assembly includes a drive motor. The power battery is used for supplying electric power for the drive motor. The drive assembly includes a drive control unit, a drive train, and a housing. The drive control unit is electrically coupled to the drive motor to control the drive motor. The drive train is at least partially connected to the drive motor and used for reducing rotational speed and increasing torque of the power output by the drive motor. The rotational speed of the drive motor is in the range from 9000 rpm to 12000 rpm, and the transmission ratio of the drive train is in the range from 9 to 12. The housing defines at least one accommodation space including a first chamber and a second chamber defined at the same side of the housing, as well as a third chamber defined at the other side of the housing. The drive motor, the drive control unit, and the drive train are at least partially located within the accommodation space and extend in a second direction that is substantially parallel to a front-rear direction of the electric scooter. The ratio of the length of the drive assembly extending in the second direction to the length of the scooter-type motorcycle extending in the first direction is in the range from 0.22 to 0.33.

The application further provides a scooter-type motorcycle. The scooter-type motorcycle includes a frame, a steering assembly, a lock assembly, a vehicle cover, a vehicle controller, a seat cushion assembly, a wheel assembly, a drive assembly, and a power battery. The steering assembly is at least partially connected to the frame. The lock assembly is at least partially mounted on the frame. The vehicle cover is at least partially connected to the frame. The vehicle controller is at least partially connected to the lock assembly. The seat cushion assembly is at least partially connected to the frame. The wheel assembly are at least partially connected to the frame. The drive assembly is used for driving the wheel assembly, the drive assembly includes a drive motor. The power battery is used for supplying electric power for the drive motor. The drive assembly includes a drive control unit, a drive train, and a housing. The drive control unit is electrically coupled to the drive motor to control the drive motor. The drive train is at least partially connected to the drive motor and used for reducing rotational speed and increasing torque of the power output by the drive motor. The rotational speed of the drive motor is in the range from 9000 rpm to 12000 rpm, and the transmission ratio of the drive train is in the range from 9 to 12. The housing defines at least one accommodation space.

The drive motor, the drive control unit, and the drive train are at least partially located within the accommodation space and extend in a second direction that is substantially parallel to a front-rear direction of the electric scooter. The ratio of the length of the drive assembly extending in the second direction to the length of the scooter-type motorcycle extending in the first direction is in the range from 0.22 to 0.33.

### BRIEF DESCRIPTION OF THE DRAWINGS

FIG. 1 is a perspective view of a scooter-type motorcycle according to an embodiment of the application;
FIG. 2 is a perspective view of the scooter-type motorcycle according to an embodiment of the application, with vehicle cover removed;
FIG. 3 shows a partial structure of a drive assembly according to an embodiment of the application;
FIG. 4 shows a partial structure of the drive assembly according to an embodiment of the application from another perspective;
FIG. 5 is a perspective view of a drive assembly housing according to an embodiment of the application;
FIG. 6 is another perspective view of the drive assembly housing according to an embodiment of the application;
FIG. 7 shows the drive assembly according to an embodiment of the application;
FIG. 8 shows the drive assembly according to an embodiment of the application from another perspective;
FIG. 9 shows the drive assembly according to another embodiment of the application;
FIG. 10 is an enlarged view of part A in FIG. 9;
FIG. 11 is a perspective view of a power distribution unit according to another embodiment of the application;
FIG. 12 shows a rear wheel according to an embodiment of the application;
FIG. 13 is a sectional view along the line B-B in FIG. 12;
FIG. 14 is an enlarged view of part C in FIG. 13;
FIG. 15 is a schematic diagram of connection of a vehicle controller according to an embodiment of the application;
FIG. 16 shows the connection of a headlight assembly and a front vehicle cover according to an embodiment of the application;
FIG. 17 shows the connection of the headlight assembly and the front vehicle cover according to an embodiment of the application;
FIG. 18 is an exploded view of a guard assembly on a USB port according to an embodiment of the application;
FIG. 19 is another exploded view of a guard assembly on the USB port according to an embodiment of the application;
FIG. 20 is a sectional view along the line D-D in FIG. 19;
FIG. 21 is a perspective view of a middle frame according to an embodiment of the application;
FIG. 22 is another perspective view of a middle frame according to an embodiment of the application;
FIG. 23 is an enlarged view of part E in FIG. 22;
FIG. 24 shows a frame nameplate mounted on the frame nameplate mounting seat according to an embodiment of the application;
FIG. 25 shows a frame nameplate mounting seat according to an embodiment of the application, with the frame nameplate removed;
FIG. 26 shows the connection structure of an electrical appliance and the middle frame according to an embodiment of the application;
FIG. 27 shows the connection structure of a rear shock absorber and the rear frame according to an embodiment of the application;
FIG. 28 shows the connection structure of an OBD device and the rear frame according to an embodiment of the application;
FIG. 29 shows the connection structure of an CBS bracket and the front frame according to an embodiment of the application;
FIG. 30 shows the connection structure of a CBS delay valve and the CBS bracket according to an embodiment of the application;
FIG. 31 is a top view of a storage box according to an embodiment of the application;
FIG. 32 shows connection of the storage box light according to an embodiment of the application;
FIG. 33 is a perspective view of a lock assembly according to an embodiment of the application;
FIG. 34 is a schematic diagram showing connection of a motor control module in the lock assembly according to an embodiment of the application;
FIG. 35 is an exploded view of a seat cushion assembly according to an embodiment of the application;
FIG. 36 is a longitudinal sectional view of the seat cushion assembly according to an embodiment of the application;
FIG. 37 is an enlarged view of part F in FIG. 36;
FIG. 38 is a perspective view of a charging port according to an embodiment of the application;
FIG. 39 is a perspective view of a charging port cover assembly according to an embodiment of the application.

### DETAILED DESCRIPTION

Embodiments of the present application will be described in detail below with reference to the accompanying drawings, however, the present application is not limited to these embodiments. Any appropriate changes or modifications can be made to the embodiments described herein and remain within the scope of the invention as defined by the appended claims.

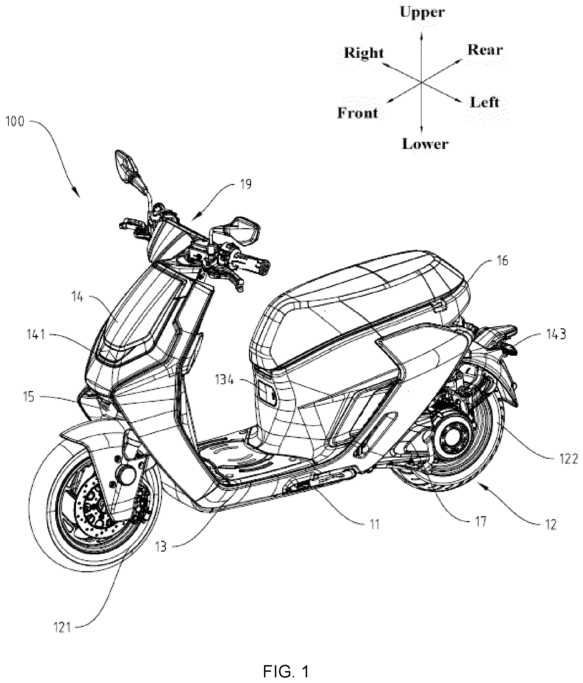

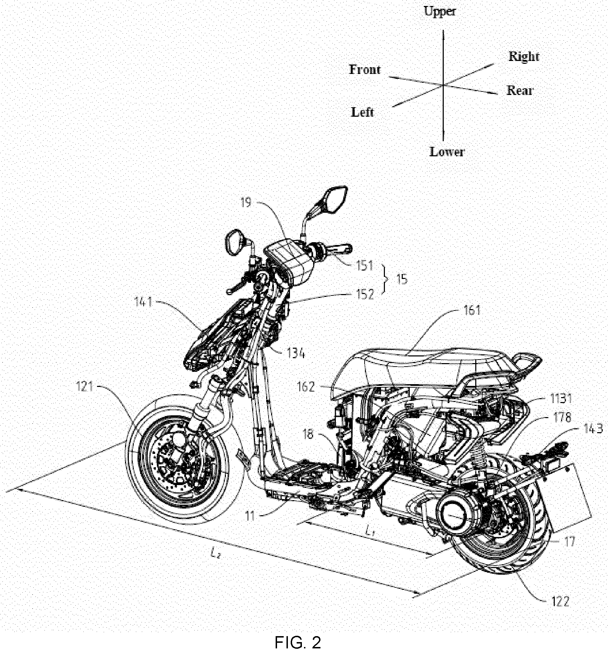

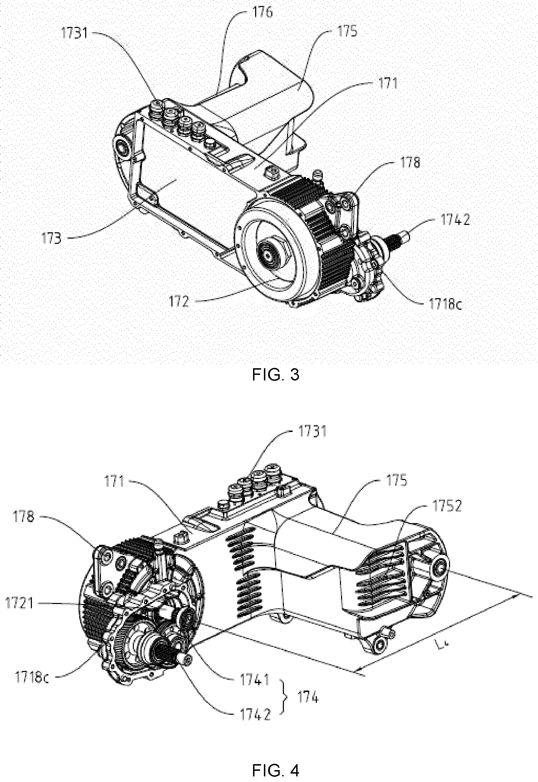

FIGS. 1 and 2 show a motorcycle, which is an electric scooter-type motorcycle 100. The electric scooter-type motorcycle 100 includes a frame 11, a wheel assembly 12, a vehicle cover 13, a lighting assembly 14, a steering assembly15, a seat cushion assembly 16, a drive assembly 17, a vehicle controller 18, and a lock assembly 19. The general orientations of front, rear, up (upper), down (lower), left and right for the electric scooter-type motorcycle 100 are defined in part in FIG. 1. The frame 11 forms the main body of the electric motorcycle 100 and is used for carrying and connecting various components on the electric scooter-type motorcycle 100. The frame 11 is a metal frame, including a front frame 111, a middle frame 112, and a rear frame 113. The wheel assembly 12 is located below the frame 11 to drive the electric scooter-type motorcycle 100 to move. The wheel assembly 12 includes a front wheel 121 located below the front frame 111 and a rear wheel 122 located below the rear frame 113. The rear wheel 122 is connected to the drive assembly 17 to drive the electric scooter-type motorcycle 100 to move forward. The vehicle cover 13 is fixed to the frame 11 and at least partially covers the frame 11 for protecting the components and structure inside the electric scooter-type motorcycle 100. The vehicle cover 13 includes a front vehicle cover 131, a side vehicle cover 132, and a rear vehicle cover 133. The lighting assembly 14 includes a headlight assembly 141 mounted at the front of the electric scooter-type motorcycle, a tail-light 143 mounted at the rear of the vehicle and a storage box light 142 mounted inside the storage box 162. The headlight assembly 141 is mounted at the front of the vehicle for lighting in front of the vehicle and/or output of turn signals and warning signals. The tail-light 143 is mounted at the tail of the vehicle for outputting turn signals and warning signals. The storage box light 142 is used for lighting inside the storage box 142. The front frame 111 mainly carries components at the front of the vehicle, such as front vehicle cover 131 and headlight assembly 141 belonging to the lighting assembly 14. The middle frame 112 mainly carries foot pedal, seat cushion assembly 16, and side vehicle cover 132. The rear frame 113 mainly carries rear vehicle cover 113, tail lights 143 belonging to the lighting assembly 14, as well as a drive assembly 17. The steering assembly 15 is connected to the front wheel 121 for controlling the running direction of the vehicle. The steering assembly 15 includes a handlebar 151 for the user to operate by hand and a steering column 152 controlled by the handlebar 151. The steering column 152 is connected to the front wheel 121 and controls the vehicle steering through the front wheel 121. The seat cushion assembly 16 is used for the user to ride, including a seat cushion 161 and a storage box 162 located under the seat cushion 161. The seat cushion 161 is connected to the storage box 162 through a hinge. The drive assembly 17 is used to provide driving force for the wheel assembly 12 of the vehicle, enabling the vehicle to move. The drive assembly 17 includes a drive motor 172, a drive control unit 173, and a drive train 174. The vehicle controller 18 controls the operation of the electric scooter-type motorcycle 100. The lock assembly 19 controls the electric scooter-type motorcycle 100 to be in a locked or unlocked state. When the electric scooter-type motorcycle 100 is in the locked state, the power battery is in the discharged state, and the power battery does not output electrical energy to the outside. When the electric scooter-type motorcycle 100 is in the unlocked state, the power battery is in the energized state, and the power battery outputs at least portion of the electrical energy outward. In one embodiment, as shown in FIGS. 3 and 4, the drive assembly 17 includes a housing 171, a drive motor 172 partially arranged inside the housing 171, a drive train 174, and a drive control unit 173. The housing 171 defines at least one accommodation space, with the drive motor 172, the drive control unit 173, and the drive train 174 arranged in the accommodation space. A length of the drive assembly extending in the front-rear direction is defined as length, L1, and the length of the electric scooter-type motorcycle extending in the front-rear direction is defined as length, L2. A ratio of the length L1 to the length L2 is in the range from 0.22 to 0.33.

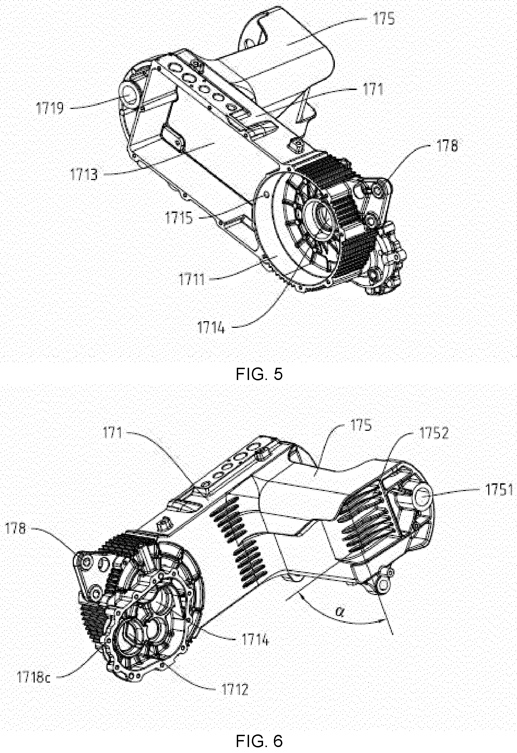

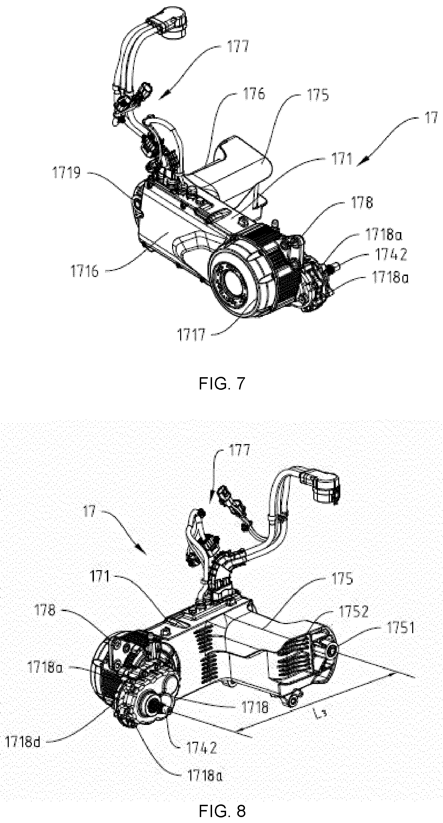

In one embodiment, as shown in FIG. 5 and FIG. 6, the housing 171 defines a first chamber 1713, a second chamber 1711, and a third chamber 1712. Each of the second chamber 1711, the third chamber 1712, and the first chamber 1713 defines an opening that communicates with the side of the housing 171. The second chamber 1711 is defined on one side of the housing 171, and the third chamber 1712 is defined on the side of the housing 171 away from the first chamber 1711. The drive control unit 173 is partially mounted in the first chamber 1713, the drive motor 172 is partially mounted in the second chamber 1711, and the drive train 174 is partially mounted in the third chamber. A first through-hole 1714 is defined between the second chamber 1711 and the third chamber 1712. As shown in FIGS. 7 and 8, the drive motor 172 includes a first output shaft 1721, and the drive train 174 includes a first input end 1741 and a power output end 1742. The first output shaft 1721 (as shown in FIG. 4) of the drive motor 172 passes through the first through-hole 1714 and is at least partially connected to the first input end 1741 (as shown in FIG. 4) of the drive train 174 located in the third chamber 1712. The power output end 1742 of the drive train 174 is at least partially connected to the wheel assembly 12. The drive control unit 173 and the drive motor 172 are electrically connected by wires. The wires may pass through a second through-hole 1715 (as shown in FIG. 5) on the partition between the first chamber 1713 and the second chamber 1711 to electrically connect the drive control unit 173 to the drive motor 172, or may pass through a wiring duct (not shown) on the partition to electrically connect the drive control unit 173 to the drive motor 172. At least one terminal connection port 1731 is arranged on the top of the first chamber 1713. In some embodiments, a plurality of terminal connection ports 1731 may be arranged side-by-side on the top of the first chamber 1713.

As shown in FIGS. 7 and 8, the drive assembly 17 further includes a first cover plate 1716, a second cover plate 1717, and a third cover plate 1718. The first cover plate 1716 is located on one side of the first chamber 1713. The first cover plate 1716 is fixedly connected to the housing 171. The first cover plate 1716 and the first chamber 1713 collectively define a first substantially closed space where the drive control unit 173 is contained. The second cover plate 1717 is located on one side of the second chamber 1711. The second cover plate 1717 is fixedly connected to the housing 171. The second cover plate 1717 and the second chamber 1711 collectively define a second substantially closed space where the drive motor 172 is contained. The third cover plate 1718 is located on one side of the third chamber 1712. The third cover plate 1718 is fixedly connected to the housing 171. The third cover plate 1718 and the third chamber 1712 collectively define a third substantially closed space where the drive train 174 is contained. A support stand 175 substantially extending in a left-right direction is arranged on the side of the housing 171 away from the third chamber 1712. The support stand 175 defines a first mounting hole 1751, and the housing 171 also defines a second mounting hole 1719 at corresponding position. The second chamber 1711 and the first chamber 1713 are defined on the same side of the housing 171, and the first cover plate 1716 and the second cover plate 1717 are integrally formed or independent of each other. The third chamber 1712 and the support stand 175 are positioned on the same side of the housing 171.

In this embodiment, the drive assembly 17 is designed by integrating the drive motor 172, the drive train 174, the drive control unit 173, and the housing 171 for containing the above three components. In addition to driving the scooter-type motorcycle 100, the drive assembly 17 can also serve as a rear fork of the scooter-type motorcycle 100 to connect the frame 11 and the wheel assembly 12. A pivot shaft 176 with a rocker arm of the scooter-type motorcycle 100 connected is mounted on one end of the drive assembly 17. The ends of the pivot shaft 176 are respectively received by pivot shaft mounting holes, and the pivot shaft 176 is substantially parallel to the support stand 175. A distance from the pivot shaft 176 to the power output end 1742 along the front-rear direction is defined as a distance L3 (as shown in FIG. 8), and the distance L3 is in the range from 320 mm to 490 mm. A distance from the pivot shaft 176 to the first output shaft 1721 is defined as a distance L4 (as shown in FIG. 4), and the distance L4 is in the range from 270 mm to 405 mm. The support stand 175 is integrally formed with the housing 171. In addition to driving the scooter-type motorcycle 100 to move the wheel assembly 12, the drive assembly 17 can also serve as a suspension system (rocker arm) of the scooter-type motorcycle 100 to connect the frame 11 and the wheel assembly 12

In this embodiment, the drive motor 172, the drive train 174, and the drive control unit 173 are integrated in the housing 171 for containing the above three components. The pivot shaft 176 which can connect the frame 11 is mounted on one end of the drive assembly 17, and a shock absorber mounting seat 178 which can be pivotally coupled to the rocker arm is mounted on the other end of the drive assembly 17. That is to say, driving the wheel assembly 12 and connecting the wheel assembly 12 to the frame 11b by the rocker arm are both realized by the drive assembly 17. The drive control unit 173 and the drive motor 172 are arranged adjacent inside the housing 171, which can shorten the distance between the drive control unit 173 and the drive motor 172, shorten the length of the electrical connection wires and reduce costs. At the same time, the drive control unit 173 may be directly connected to the drive motor 172 through contacts or other means, further reducing the use of wires and improving the reliability of the connection between the drive control unit 173 and the drive motor 172, enhancing the reliability of the drive assembly 17. A third chamber 1712 can be defined on the housing 171 to contain a drive train 174 with a larger transmission ratio, which can better meet the daily usage requirements of the scooter-type motorcycle 100. In this embodiment, the rotational speed of the drive motor is in the range from 9000 rpm to 12000 rpm, and the transmission ratio of the drive train is in the range from 9 to 12. Although the drive motor 172 and the drive train 174 are not positioned on the same side of the housing 171, a first through-hole 1714 configured for allowing the first output shaft 1721 of the drive motor 172 to be directly coupled to the first input end 1741 of the drive train 174 is defined between the second chamber 1711 and the third chamber 1712. The power output by the drive motor 172 can be directly transmitted to the drive train 174, thereby avoiding intermediate transmission mechanisms and improving the efficiency of power transmission. The components for driving the scooter-type motorcycle are integrated in the drive assembly 17 for easy assembly. The relevant components can be assembled together and tested before being installed on the scooter-type motorcycle. At the same time, the integrated design also facilitates inspection and troubleshooting during maintenance. For problems with vehicle drive related components, only the integrated drive assembly 17 needs to be inspected, without the need for major disassembly of the scooter-type motorcycle, increasing maintenance convenience and reducing maintenance difficulty.

The second chamber 1711 and the first chamber 1713 are defined on the same side of the housing 171, so as to reduce the use of components of the drive assembly 17. The first cover plate 1716 of the first chamber 1713 may be integrally formed with the second cover plate 1717 of the second chamber 1711, which can reduce the number of components of the drive assembly 17 and ensure the flatness of the first cover plate 1716 and the second cover plate 1717 during assembly, thereby avoiding the problem of uneven seams between the first cover plate 1716 and the second cover plate 1717. The first cover plate 1716 of the first chamber 1713 and the second cover plate 1717 of the second chamber 1711 may also be designed as separate parts, so that the first cover plate 1716 of the first chamber 1713 and the second cover plate 1717 of the second chamber 1711 can be dis-assembled separately. When only the internal components of the first chamber 1713 or the second chamber 1711 need to be repaired or replaced, the corresponding cover plate can be removed separately, without removing both covers at the same time, increasing the convenience of maintenance. The support stand 175 is positioned on one side of the housing 171 to cooperate with the housing 171 to provide the installation position of the pivot shaft 176. On the other hand, a plurality of fins 1752 may be installed on the side adjacent to the drive train 174 of the support stand 175, which can dissipate heats for the drive control unit 173, the drive motor 172, and the drive train 174 contained in the housing 171, which generate a large amount of heats. The plurality of fins 1752 are substantially perpendicular to the support stand 175. Further, an angle α is defined between the surface of the fins 1752 and the support stand 175, and the angle α is in the range from 75 degrees to 105 degrees. These fins 1752 can not only dissipate the heat from the heating components contained in the drive assembly 17, but also reduce the weight of the support stand 175 while ensuring its strength through a hollow structure, contributing to the lightweight of the drive assembly 17 and the vehicle 100. At least one terminal connection port 1731 is arranged on the top of the first chamber 1713, and the terminal connection port 1731 can connect the drive control unit 173 with the power battery or vehicle controller 18 or the like for energy transmission or information communication.

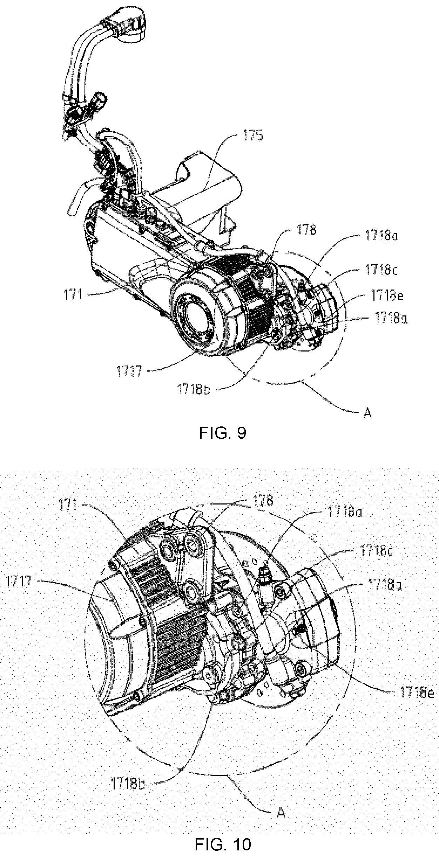

In one embodiment, as shown in FIG. 9, the drive assembly 17 includes a drive train 174 (as shown in FIG. 3) contained in the third chamber 1712 (as shown in FIG. 6) on one side of the housing 171 of the drive assembly 17. As shown in FIG. 10, a third cover plate 1718 is mounted on one side of the drive train 174, the third cover plate 1718 is fixed to the housing 171 of the drive assembly 17 by a plurality of bolts. A plurality of caliper mounting holes 1718a configured for mounting the brake caliper 1718e are defined on one side of the third cover plate 1718. The plurality of bolts includes a first bolt 1718b positioned between two caliper mounting holes 1718a. The end of the first bolt 1718b in the third cover plate 1718 is substantially placed on the inner side of the third cover plate 1718, and does not protrude from the side of the third cover plate 1718 adjacent to the brake caliper 1718e. If the first bolt 1718b is a headed bolt, then the headed bolt will fix the third cover plate 1718 to the housing 171 from the housing 171 side to the third cover plate 1718 side along the fourth direction 102. The head of the headed bolt is positioned on one side of the housing 171. It should be noted that the first bolt 1718b may be a headless bolt, so it can be installed either along the fourth direction 102 or against the fourth direction 102, as long as the end of the bolt does not protrude from the side of the third cover plate 1718 adjacent to the brake caliper 1718e and does not affect the brake caliper 1718e. The third cover plate 1718 defines a threaded aperture 1718d and the housing 171 also defines a corresponding bolt connection aperture 1718c matched with the threaded aperture 1718d. The first bolt 1718b connects the third cover plate 1718 and the housing 171 through the threaded aperture 1718d and the bolt connection aperture 1718c. For the first bolt 1718b, the ratio of the length of the screw to the sum of the depth of the bolt connection aperture 1718c and the depth of the threaded aperture 1718d is in the range from 0.5 to 1.5. The length of the screw is greater than or equal to the depth of the threaded aperture 1718d. Further, for the first bolt 1718b, the ratio of the length of the screw to the sum of the depth of the bolt connection aperture 1718c and the threaded aperture 1718d is in the range from 0.8 to 1.2. The length of the screw is greater than or equal to the depth of the threaded aperture 1718d. For small-sized vehicles, the size of their wheels is also correspondingly smaller, resulting in a reduction in the size of a brake disc. The brake caliper 1718e is closer to the center of the brake disc so as to adapt to the small-sized brake disc. The brake caliper 1718e needs to be as close as possible to the drive train 174 to reduce the lateral dimension of the entire vehicle, thereby making assembly more compact. The brake caliper 1718e is installed on the third cover plate 1718 on the right side of the drive train 174 in the front-rear direction. The third cover plate 1718 of the drive train 174 is fixedly connected to the housing 171 by a plurality of bolts. The brake caliper 1718e is fixed to the third cover plate 1718 of the drive train 174 by at least two bolts. At least one bolt of the plurality of bolts is assembled from the housing 171 side to the third cover plate 1718 side along the fourth direction 10 so as to make the drive assembly 17/drive train 174 and the brake caliper 1718e more compact. When the bolts fixing the drive assembly housing 171 and the third cover plate 1718 are assembled along the fourth direction 102, the head of the bolt is not positioned between the third cover plate 1718 and the brake caliper 1718e, so there is no need to occupy space between the third cover plate 1718 and the brake caliper 1718e. The distance between the third cover plate 1718 and the brake caliper 1718e can be further reduced, making the entire structure more compact. When the bolts are assembled from the housing 171 side to the third cover plate 1718 side along the fourth direction 102, the bolts are threaded into a corresponding aperture or blind hole with internal threads. The end of the screw in the bolt is threaded inside the third cover plate 1718, so no components will protrude from the third cover plate 1718 and will interfere and affect the brake caliper 1718e.

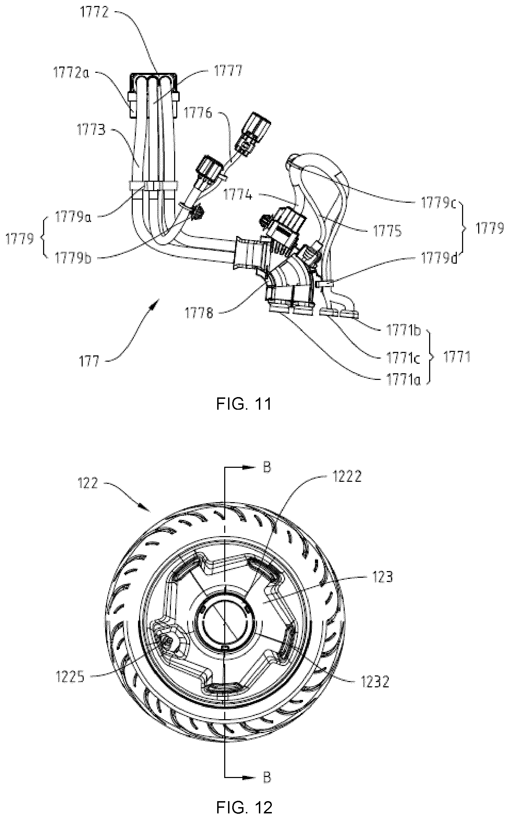

In one embodiment, the drive assembly 17 further includes a power distribution unit 177. The drive control unit 173 is electrically coupled to the power distribution unit 177. As shown in FIG. 11, the power distribution unit 177 includes a first type of terminal connection port 1771 and a second type of terminal connection port 1772. The first type of terminal connection port 1771 includes first terminal connection port 1771a electrically coupled to the drive control unit, a second terminal connection port 1771b, and a third terminal connection port 1771c.| The second type of terminal connection port 1772 includes a fourth terminal connection port 1772a electrically coupled to the power battery, and the fourth terminal connection port 1772a is for the power battery. The first terminal connection port 1771a is for high-voltage power supply. The first terminal connection port 1771a is electrically coupled to one end of at least one high-voltage power line 1773, and the other end of the high-voltage power line 1773 is electrically coupled to the fourth terminal connection port 1772a. The fourth terminal connection port 1772a is also electrically coupled to one end of the charging line 1776, and the fourth terminal connection port 1772a is also electrically coupled to one end of the power control line 1777 of the power management system. The second terminal connection port 1771b is for control signal and is electrically coupled to one end of at least one control signal line 1774. The other end of the control signal line 1774 is electrically coupled to the vehicle controller 18. The third terminal connection port 1771c is for DC-DC circuit and is electrically coupled to one end of DC-DC conversion line 1775. The other end of the DC-DC conversion line 1775 is electrically coupled to the high-voltage conversion device (DC-DC).

The power distribution unit 177 further includes a wiring harness guide device 1778 and a wiring harness fixing device 1779. The wiring harness guide device 1778 defines two guide ports with an angle greater than or equal to 90 degrees. The high-voltage power line 1773 are arranged in the wiring harness guide device 1778 and passes through the two guide ports of the wiring harness guide device 1778. The wiring harness fixing device 1779 includes a first fixing device 1779a, a second fixing device 1779b, a third fixing device 1779c, and a fourth fixing device 1779d. The first fixing device 1779a binds and fixes the high-voltage power line 1773, the charging line 1776, and the power control line 1777 together. The second fixing device 1779b binds and fixes the power control line 1777 together. The third fixing device 1779c binds and fixes the DC-DC conversion line 1775 and control signal line 1774 together. The fourth fixing device 1779d binds the DC-DC conversion line 1775 and control signal line 1774 together and fixes them to the side of the harness guide device 1778. The distance from the first fixing device 1779a to the power battery terminal is less than the distance from the second fixing device 1779b to the power battery terminal connection port. The distance from the fourth fixing device 1779d to the first type of terminal connection port 1771 is less than the distance from the third fixing device 1779d to the first type of terminal connection port 1771. The high-voltage power line 1773 is shielded wiring harnesses, which can avoid external interference with the high-voltage power line 1773 and also avoid electromagnetic interference from the high-voltage power line 1773 with other wiring harnesses. In this embodiment, the wiring harnesses of the drive control unit are guided, and the high-voltage wiring harnesses and low-voltage wiring harnesses are guided separately, which isolates the high-voltage and low-voltage wiring harnesses so that they do not interfere with each other, ensuring safe and stable use, and facilitating maintenance. At the same time, the relevant wiring harnesses are organized to form a power distribution unit, thereby achieving modular processing and being able to be applied to more vehicle models in a modular manner, reducing research and development costs.

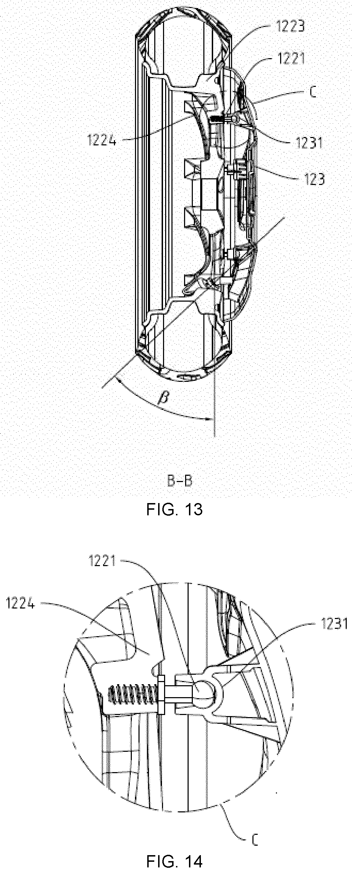

In one embodiment, as shown in FIGS. 12 and 13, a wheel cover 123 covers the rear wheel 122 of the wheel assembly 12. The wheel cover 123 is detachably installed on the rear wheel 122. The wheel cover 123 is positioned on the side of the rear wheel 122 away from the drive assembly 17. The rear wheel 122 of a two wheeled motorcycle is the driving wheel of the vehicle, with one side connected to the drive assembly 17, while the other side is usually completely exposed. During running, dust, mud, water, and even occasional splashing of sand and stones can cause damage to the wheels on one side. At times, these mud, water, and stones can also damage the drive assembly or braking devices on the other side through the spokes of the wheels, causing the drive assembly 17 or braking devices to fail, or damaging the drive assembly 17 or braking devices. The above situation will cause damage to the vehicle, affecting the service life of various components in the vehicle, thereby affecting the service life of the vehicle, or directly affecting the driving safety of the vehicle. The wheel cover 123 is arranged on the side opposite to the drive assembly 17 on the wheel, which can provide a certain isolation effect between dust, mud, water, sand, and stones inside the wheel, protect the wheel from the influence and damage of the above factors, ensure the service life of the wheel and related components, and also ensure the safety of vehicle during running.

As shown in FIGS. 13 and FIG. 14, a ball race 1221 is arranged on one side where the rear wheel 122 comes into contact with the wheel cover 123. A ball race 1231 matched with the ball stud 1221 is arranged on a corresponding position of the wheel cover 123. The ball stud 1221 is arranged on the wheel hub 1222, rim 1223, or spoke 1224 of the rear wheel 122. The wheel cover 123 is detachably connected to the wheel. The wheel cover 123 is fixedly connected to the rear wheel 122 under normal circumstances. When necessary, such as when the wheel needs to be overhauled, the wheel cover 123 can be removed for easy inspection and maintenance of the wheel, as well as for easy replacement of the wheel cover 123. A plurality of weight reducing holes 1232 may also be defined on the wheel cover 123 to reduce the weight of the wheel cover 123 and the weight of the entire vehicle. In addition, the weight reducing holes 1232 also allows users to partially observe the use of the interior of the rear wheel 122 and even the drive assembly 17 without removing the wheel cover 123. The shape of the weight reducing holes 1232 may also be designed according to the user's needs, meeting their personalized needs. The detachable connection method also allows users to easily change the style or pattern of the wheel cover 123 according to their preferences, adapting to the needs of providing users with more choices in different circumstances. In one embodiment, at least three ball studs 1221 are arranged on the wheel. The ball races 1231 matched with the ball studs 1221 are arranged on a corresponding position of the wheel cover 123. The ball studs 1221 are equidistant along the axis of the wheel. The wheel cover 123 is detachably connected to the wheel through the ball stud 1221 and the ball race 1231 matched with each other. The ball studs 1221 are arranged on the wheel. In some embodiments, the ball studs 1221 may be arranged on the hub 1222, the spoke 1224, or the rim 1223. The ball studs 1221 are equidistant along the axis of the wheel to ensure the stability of the connection. The number of the ball studs 1221 on the wheels should not be less than three to ensure the stability of the connection. Five ball studs 1221 are preferred for ensuring the stability of the connection and not increasing costs too much. As shown in FIG. 12, the ball race 1231 consists of a pair of hemispherical races arranged in opposite directions. This ball race 1231 consists of a pair of hemispherical races has an opening size less than the size of the ball stud 1221. The pair of hemispherical races define a chamber for receiving the ball stud, and the chamber has a size greater than or equal to the size of the ball stud 1221. The wheel cover 123 is detachably connected to the wheel by means of the ball stud 1221 and the ball race 1231 matched with each other.

The pair of hemispherical races define a spherical chamber for receiving the ball stud 1221. The spherical chamber defines an opening for passing through the ball stud 1221, and the opening has a size less than the size of the ball stud 1221. The ball race 1231 has certain deformation ability due to being consisting of a pair of relatively independent hemispherical races. When the wheel cover 123 is mounted, the ball stud 1221 squeezes the opening of the ball races, deforming the two hemispherical races. The ball stud 1221 enters the chamber of the ball race 1231. The ball race 1231 restricts the ball stud 1221 to prevent it from detaching from the ball race 1231, which realizes the connection between the ball stud 1221 and the ball race 1231 (connection between the wheel cover 123 and the rear wheel 122).

In one embodiment, as shown in FIGS. 12 and 13, the rear wheel 122 includes a tire, and the rear wheel 122 includes a valve 1225 for inflating the tire of the rear wheel 122. The valve 1225 is positioned on the side of the wheel rim 1223 in contact with the spoke 1224, and tilts towards the side away from the drive assembly 17. An angle β is defined between the valve 1225 and the wheel radial plane, and the angle β is in the range from 30 degrees to 60 degrees. The valve in existing wheels is generally perpendicular to the tangent plane of the inner wall of the wheel rim, which is easy to process and has good versatility. In this embodiment, a drive assembly 17 is installed on one side of the rear wheel 122, and a wheel cover 123 is installed on the other side of the wheel to protect the wheel and the drive assembly 17. The valve 1225 is tilted outward to avoid adverse effects of valve 1225 on the setting and installation of drive assembly 17, brake assembly, and wheel cover 123 on both sides of the wheel, and to facilitate inflation of rear wheel 122. In an alternative embodiment, the angle β is in the range from 35 degrees to 55 degrees. In still another embodiment, the angle β is in the range from 40 degrees to 50 degrees. The wheel cover 123 defines at least one opening 1232, and the valve 1225 extends from opening 1232.

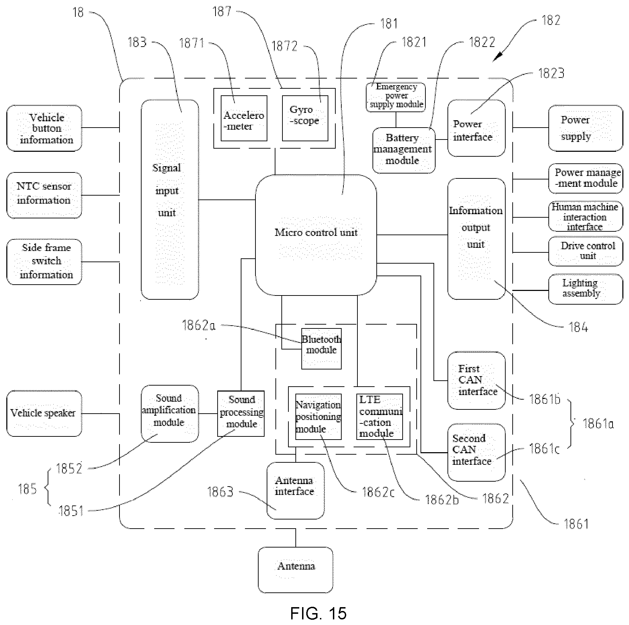

In one embodiment, as shown in FIG. 15, the vehicle controller 18 includes a micro control unit 181, a power supply unit 182, a signal input unit 183, an information output unit 184, a sound control unit 185, a communication unit 186, and a motion information unit 187. The communication unit 186 may include a first communication unit 1861 and a second communication unit 1862. The first communication unit 1861 is an internal communication unit, and the second communication unit 1862 is the vehicle external communication unit.

The first communication unit 1861 may include a CAN communication unit 1861a. The second communication unit 1862 includes a Bluetooth communication module 1862a, an LTE communication module 1862b, and a navigation positioning module 1862c. The micro control unit 181 is used to process information in the vehicle controller 18 and generate and execute programs in the vehicle controller 18. The power supply unit 182 is used to supply electricity to each unit in the vehicle controller 18 to maintain the operation of the vehicle controller 18. The power supply unit 182 includes an emergency power supply module 1821, a battery management module 1822 for managing charging and discharging, and a power interface 1823 for obtaining electricity from outside the vehicle controller 18. The emergency power supply module 1821 may serve as a secondary battery including existing or future rechargeable batteries such as nickel hydrogen batteries, lithium-ion batteries, or sodium batteries. The emergency power supply module is used to supply electricity to the vehicle controller and various unit modules thereof for a certain period of time when the vehicle controller is disconnected from external power sources, so that the vehicle controller can still operate for a period of time. Further, emergency power supply module can report the fault to the remote terminal through the communication unit 186, and notify the other control units of the vehicle of the current situation encountered by the vehicle controller. The battery management module 1822 is used to supply electricity to the vehicle controller 18 during normal and emergency situations, and to switch the supply electricity to the emergency power supply module 1821 in case of emergency situations. The power interface 1823 can further be connected to the power supply outside the vehicle controller 18, which includes logic power supply, load power supply, and various rechargeable power supplies. The signal input unit 183 is used to obtain information from vehicle sensors and transmit the information to the micro control unit 181. The information input by the signal input unit 183 includes vehicle button information, NTC sensor information, and side frame switch information. The information output unit 184 is used to output control signals or information generated by the micro control unit 181 to outside the vehicle controller 18. The signals output by the information output unit 184 may include a drive control signal output to the drive control unit 173, power management signal output to the vehicle power management module, human-machine interaction information output to the human-machine interface, and lighting control signals output to the vehicle lighting assembly 14. The sound control unit 185 is used to receive sound information from the micro control unit 181 and process the sound information before transmitting it to the vehicle speakers. The sound control unit 185 includes a sound processing module 1851 and a sound amplification module 1852. The sound processing module 1851 is used to process the sound information output by the micro control unit 181 and transmit the processed sound effect information to the sound amplification module 1852. The sound amplification module 1852 is used to amplify the sound information processed by the sound processing module 1851 and transmit the amplified sound information to the vehicle speakers. The first communication unit 1681 is the vehicle internal communication unit used for communication between functional modules inside the vehicle. The first communication unit 1681 may include a CAN communication unit 1861a for CAN communication between the micro control unit 181 and the vehicle. The CAN communication unit 1861a may include a first CAN interface 1861b and a second CAN interface 1861c both electrically coupled to the CAN bus. The second communication unit 1862 is an external communication unit used for communication between the vehicle and cloud devices or remote terminals. The external communication unit 186 may include a short-distance communication module and a long-distance communication module. The short-distance communication module may include a Bluetooth communication module 1862a, and the long-distance communication module may include an LTE communication module 1862b and a navigation positioning module 1862c. The long-distance communication module is further electrically coupled to the antenna interface 1863. The antenna interface 1863 is electrically coupled to the vehicle antenna for transmitting communication signals. The motion information unit 187 is used to obtain vehicle motion information, which includes vehicle acceleration information and motion trajectory. The motion information unit 187 includes an accelerometer 1871 and a gyroscope 1872. Some existing electric two-wheeled vehicles have a vehicle controller, however firstly, most vehicles only have some units in the vehicle controller in this embodiment, and can only achieve simple vehicle control functions, such as control of the vehicle lighting system and motor control, secondly, the integration degree of the vehicle controller for most vehicles is relatively low, only having two to three functions in the vehicle controller in this embodiment. Other functions are either not equipped or scattered in other devices of the vehicle, making it impossible to achieve integrated and unified management. There are problems such as slow information processing speed, large vehicle control delay, large space occupied by scattered components, and high energy consumption of scattered components. In this embodiment, the above-mentioned micro control unit 181, the sound control unit 185, the CAN communication unit 1861, the wireless communication unit 186, and the information output unit 184 are centralized in one vehicle controller 18, which has the advantages of high integration, fast information processing, fast vehicle control, small footprint, and low energy consumption. At the same time, the vehicle controller 18 has high integration and can be modularized for multiple vehicle models, without the need to re-arrange the above units and modules according to different vehicle models, which can reduce research and development costs.

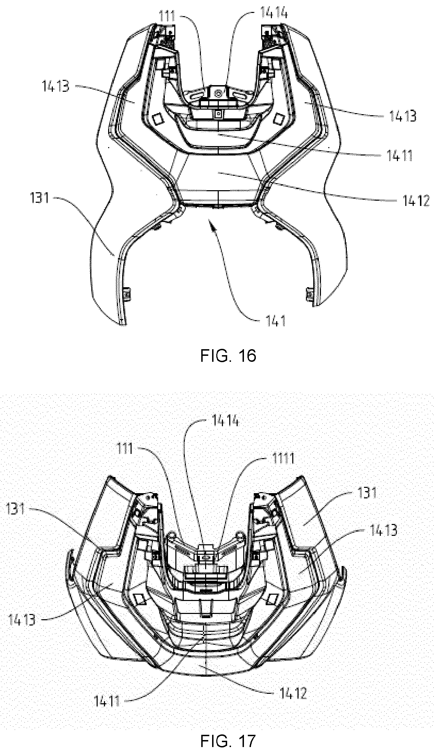

In one embodiment, as shown in FIGS. 16 and 17, the lighting assembly 14 may include a headlight assembly 141. The headlight assembly 141 may include a high beam headlight 1411, a low beam headlight 1412, and left and right turn signals 1413 located on both sides. On common electric scooters, the headlight assembly 141 generally only integrates the high beam headlight 1411 and the low beam headlight 1412, while left and right turn signals 1413 are separately located near the left and right handlebars. Although this can meet the layout requirements of headlight assembly 141, but the integration of the front lights of the vehicle is lower and the wiring is more complex. At the same time, the left and right turn signals 1413 are separately installed near the handlebars, which has low strength and is prone to collision damage, resulting in a shorter service life of the left and right turn signals 1413, requiring frequent replacement and increasing usage costs.

In this embodiment, the headlight assembly 141 and the front vehicle cover 131 are first assembled into the front of vehicle, and then the assemblies on the front are fixedly installed on the front frame 111.

In this embodiment, only the assembly relationship between the headlight assembly 141 and the front vehicle cover 131, as well as the relationship between the front vehicle cover 131 and the front frame 111, need to be considered sequentially to achieve the assembly between the headlight assembly 141, the front vehicle cover 131, and the front frame 111. The effects of these two assemblies can be directly obtained and adjusted in a timely manner during the assembly process. The assembly method of installing headlight assembly 141 and front vehicle cover 131 respectively on the front frame 111, the assembly effect between headlight assembly 141 and front vehicle cover 131 can only be obtained after complete installation, and cannot be obtained in a timely manner during the assembly process. If problems occur during the pre-assembly stage, they cannot be corrected in a timely manner, and the adjustment cost is relatively high.

In this embodiment, the headlight assembly 141 may be connected to the front vehicle cover 131 through bolt fixation, or may be fixed and connected by snap connection. The connection method between the headlight assembly 141 and the front vehicle cover 131 may not be limited to the above connection methods, but can be any connection method that can connect the headlight assembly 141 with the front vehicle cover 131. In this embodiment, the front components assembled from the headlight assembly 141 and the front vehicle cover 131 are installed on the front frame 111, and the fixing points are respectively located on the headlight assembly 141 and the front vehicle cover 131. A positioning groove 1414 is defined at the inner side of the headlight assembly 141, and the front frame 111 is equipped with a guiding block 1111 that matches the positioning groove 1414. The headlight assembly 141 can be assembled under the action of gravity with the coordination of the positioning groove 1414 and the guiding block 1111. After assembly, the installation holes located inside the front vehicle cover 131 are aligned and matched with the corresponding installation holes on the front frame 111, which facilitates the subsequent fixing and connection of bolts and other devices. The setting of the positioning groove 1414 and the guiding block 1111 not only serves to fix the headlight assembly 141 or the front assembly, but also to position the installation point between the front vehicle cover 131 and the front frame 111, making it convenient and accurate for positioning. In addition, the combination of the positioning groove 1414 and the guiding block 1111 has its own load-bearing capacity, and after assembly, the fixed assembly between the front vehicle cover 131 and the front frame 111 can be completed without the need for support operations, which can save manpower and improve efficiency.

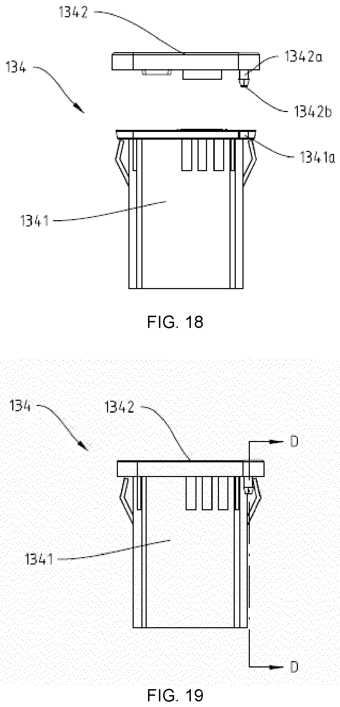

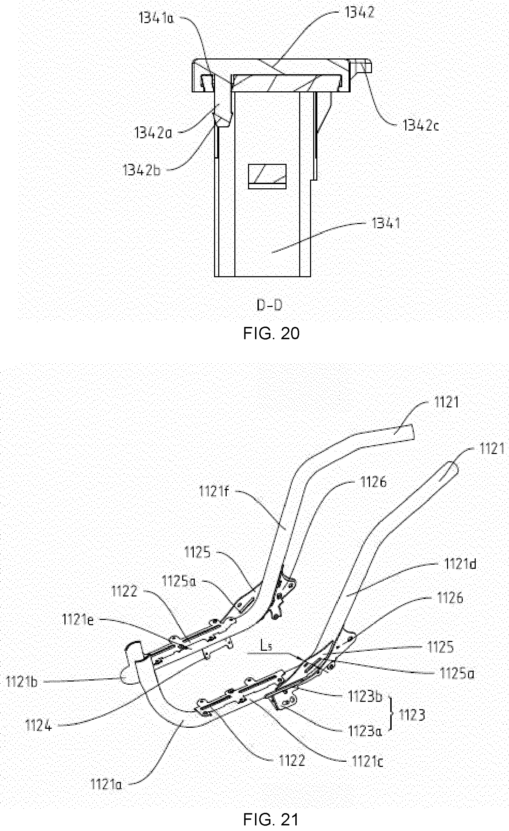

In one embodiment, an USB port is defined on the front vehicle cover 131, and a guard assembly 134 is provided to protect the USB port (as shown in FIG. 2). As shown in FIGS. 18 and 19, the guard assembly 134 may include a guard base 1341 for accommodating the USB port and a guard lid 1342 covering the USB port. The guard base 1341 is sleeved on the USB port and is fixedly connected to the USB port. As shown in FIG. 20, the guard base 1341 defines a limit hole 1341a, and a limit column 1342a that matches the limit hole 1341a is arranged on the guard lid 1342. An anti-detachment member is arranged at the end of the limit column 1342a on the guard lid 1342. After the limit column 1342a is matched with the limit hole 1341a, the limit column 1342a cannot detach from limit hole 1341a. After the guard lid 1342 is matched with the guard base 1341, the guard lid 1342 can rotate around the axis of the limit column 1342a. USB and other charging ports have become a common choice on the gasoline powered or electric vehicles, because more and more intelligent devices are being used in the vehicles. A guard assembly is provided to protect the USB port when the USB port is not used during the vehicle is running.

In this embodiment, the guard assembly 134 includes a guard base 1341 sleeved on the USB port and a guard lid 1342 that matches with the guard base 1341. A limit column 1342a is arranged on the guard lid 1342, and the guard base 1341 defines a limit hole 1341a. The limit column 1342a and the limit hole 1341a are matched with each other to connect the guard lid 1342 and the guard base 1341. An anti-detachment member 1342b is arranged at the end of the limit column 1342a on the guard lid 1342, which ensures that the limit column 1342a cannot easily detach from the limit hole 1341a after matching with the limit hole 1341a. This also ensures that the guard lid 1342 will not easily detach after matching with the guard base 1341, so that it can still be connected to the guard base 1341 after the guard lid 1342 is opened, thus solving the problem of easily losing the guard lid 1342. At the same time, due to the setting of the limit column 1342a and the limit hole 1341a, the guard lid 1342 can rotate along the axis of the limit column 1342a, that is, the guard lid 1342 can rotate around the limit hole 1341a in the guard base 1341. After opening the guard lid 1342, the guard lid 1342 can be opened at a certain angle manually or under the influence of gravity to facilitate the use of the USB port and also to facilitate single handed use. The top of the guard base 1341 is flush with or slightly higher than the top of the USB port. If the USB port is higher than the guard base 1341, The protruding portion of the USB port needs to be protected by the guard lid 1342, which increases the thickness of the guard lid 1342, thereby increasing the weight of the guard lid 1342. The guard lid 1342 is connected to the guard base 1341 by the matching structure of the limit column 1342a and the limit hole 1341a. The guard base 1341 and the guard lid 1342 are still connected by an anti-detachment member arranged at the end of the limit column 1342a when the guard lid 1342 is in the opening state. The increase in the weight of the guard lid 1342 will increase the pressure on the anti-detachment member. Therefore, reducing the weight of guard lid 1342 can correspondingly extend the service life of the anti-detachment member. At the same time, the USB port is not higher than the guard base 1341, which can better protect the USB port when in use.

A male buckle connector is arranged on the inner side of the side wall of the guard lid 1342, and a female buckle receptacle matched with the male buckle connector is arranged on the outer side of the side wall of the guard base 1341. The guard base 1341 and the guard lid 1342 are fixed together by the fitting of the male buckle connector and the female buckle receptacle, which is simple in structure and easy to open and close. The side wall of the guard base 1341 tilts outward at a certain angle from bottom to top. A grip portion 1342c is arranged on one side of the guard lid 1342 for convenient opening by the user, which avoids opening the guard lid 1342 by breaking the guard lid 1342 and avoids destroying the connection between the guard lid 1342 and the guard base 1341 due to opening from the side of the limit column 1342a. The grip portion 1342c guides the user to open the guard lid 1342 from the side away from the limit column 1342a, ensuring that there is no irreversible detachment between the guard lid 1342 and the guard base 1341 due to violent opening. The storage box 162 of the seat cushion assembly 16 also defines the above-mentioned USB port and corresponding guard assembly 134.

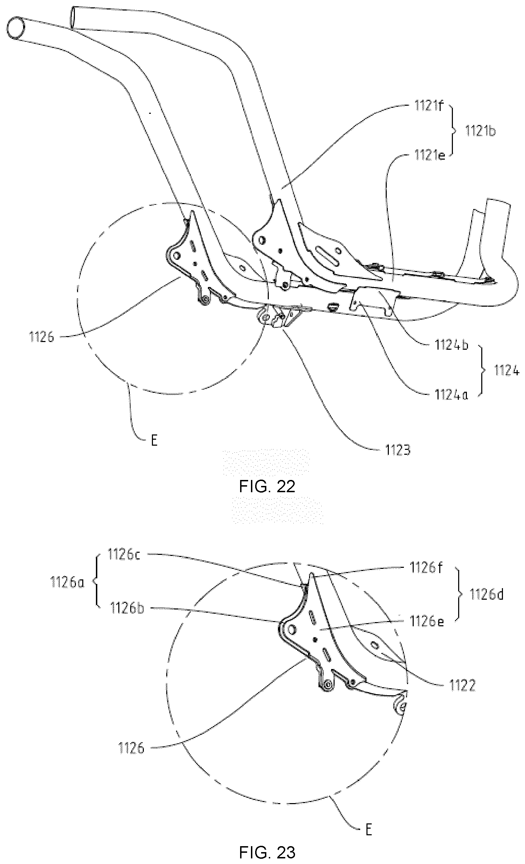

In one embodiment, as shown in FIGS. 21 and 22, the middle frame 112 includes two longitudinal tubes (ie. a first longitudinal tube 1121a and a second longitudinal tube 1121b) symmetrical with respective with a longitudinal center plane in the vehicle width direction. Each longitudinal tubes 1121 includes a side tube and a rear support tube. The first longitudinal tube 1121a includes a first side tube 1121c and a first rear support tube 1121d. The second longitudinal tube 1121b includes a second side tube 1121e and a second rear support tube 1121f. From the side view of the frame, the middle frame 112 is U-shaped, and the pedal of the electric scooter 100 is located on the middle frame. The first side tube 1121c and the second side tube 1121e form a bracket at the front of the pedal and storage box 162. The first rear support tube 1121d and the second rear support tube 1121f form a bracket at the rear of the storage box 162. The structure of the middle frame 112 is relatively thin and has low strength, especially for the first side tube 1121c and the second side tube 1121e, which are relatively long in length and lack reinforced structures, and has a risk of fracture. Therefore, a side tube reinforcement plate 1122 is mounted on the first side tube 1121c or the second side tube 1121e. The side tube reinforcement plates 1122 are welded to the upper surface of the first side tube 1121c or the second side tube 1121e, and the welding seam extends along the first side tube 1121c or the second side tube 1121e.

In this embodiment, it is that the side tube reinforcement plate, rather than the scattered reinforcement blocks is used to reinforce the first side tube 1121c or the second side tube 1121e, and the welding seam extends along the first side tube 1121c or the second side tube 1121e, which can solve the problem of damaging to the first side tube 1121c or the second side tube 1121e due to weld stress concentration, and the problem of stress concentration caused by the side tube reinforcement plate 1122. A plurality of accessory mounting seats are disposed on the outer side of the first side tube 1121c or the second side tube 1121e. For example, a side frame mounting seat 1123 is disposed on the outer side of the first side tube 1121c, and a frame nameplate mounting seat is disposed on the outer side of the second side tube 1121e. The accessory mounting seat includes an accessory mounting portion and an accessory extension portion. The accessory extension portion is a curved surface that matches the outer surface of the first side tube 1121c or the second side tube 1121e. The side frame mounting seat 1123 includes a side frame mounting portion 1123a and a side frame extension portion 1123b. The side frame mounting portion 1123a defines a side frame mounting hole, and the side frame extension portion 1123b is a curved surface that matches the outer surface of the first side tube 1121c. The side frame extension portion 1123b is fixedly connected to the outer surface of the first side tube 1121c by welding, and the side frame extension portion 1123b is wrapped on the outer surface of the first side tube 1121c. The frame nameplate mounting seat 1124 includes a frame nameplate mounting portion 1124a and a frame nameplate extension portion 1124b. The frame nameplate mounting portion 1124a a frame nameplate mounting hole, and the frame nameplate extension portion 1124b is a curved surface that matches the outer surface of the second side tube 1121e. The frame nameplate extension portion 1124b is fixedly connected to the outer surface of the second side tube 1121e by welding, and the frame nameplate extension portion 1124b is wrapped on the outer surface of the second side tube 1121e.

In this embodiment, the side frame mounting seat 1123 and the frame nameplate mounting seat 1124 are respectively welded to the outer surface of the first side tube 1121c and the second side tube 1121e through the mutual matching of curved surfaces, which not only solve the problem of stress concentration after welding the side frame mounting seat 1123 and the frame nameplate mounting seat 1124, but also enhance the strength of the first side tube 1121c and the second side tube 1121e. A support tube reinforcement plate 1125 is arranged at the connection between the first side tube 1121c and the first rear support tube 1121d. The support tube reinforcement plate 1125 is welded to the outer surface of the first side tube 1121c and the first rear support tube 1121d. The support tube reinforcement plate 1125 has at least three curved edges, with at least curved edge defining a weight reducing hole, the minimum distance from the weight reducing hole 1125a to the edge of the support tube reinforcement plate 1125 is defined as a distance L5, and the distance L5 is greater than or equal to 12 mm. Furthermore, the minimum distance L5 is greater than or equal to 10 mm. Still furthermore, the minimum distance L5 is greater than or equal to 7 mm.

The side welding method in this embodiment can solve the problem of stress concentration and effectively enhance the strength of related structures. The edges of the support tube reinforcement plate 1125 are all arc-shaped structures, which can reduce the stress concentration points of the support tube reinforcement plate 1125 and avoid cracks that may affect the strength of the support tube reinforcement plate 1125 due to stress concentration. Several weight reducing holes 1125a are defined in the support tube reinforcement plate 1125 to reduce the weight of the support tube reinforcement plate. The minimum distance from the weight reducing hole 1125a to the edge of the support tube reinforcement plate 1125 is greater than or equal to 12 mm, to ensure that the weight reducing hole 1125a does not reduce the strength of the support tube reinforcement tube itself. Similarly, another support tube reinforcement plate 1125 is arranged at the connection between the second side tube 1121e and the second rear support tube 1121f. A motor mounting plate 1126 defining at least one mounting hole for mounting a motor is arranged on the rear support tube 1121d. The motor mounting plate 1126 has at least three curved edges.

As shown in FIGS. 22 and 23, the motor mounting plate 1126 includes a first mounting plate 1126a and a second mounting plate 1126d. The first mounting plate 1126a includes a first mounting portion 1126b and a first extension portion 1126c. The second mounting plate 1126d includes a second mounting portion 1126e and a second extension portion 1126f. The second mounting portion 1126e of the second mounting plate 1126d is adhered to one side of the first mounting portion of the first mounting plate 1126a. The first mounting portion 1126b has a larger area than the second mounting portion 1126e. The first extension portion 1126c has a curved surface that matches a side surface of the first rear support tube 1121d and is welded to the side surface of the first rear support tube 1121d. The first extension portion 1126c is wrapped on a side surface of the first rear support tube 1121d. The second extension portion 1126f is a curved surface that matches the side surface of the first rear support tube 1121d and is welded to another side surface of the first rear support tube 1121d. The second extension portion 1126f is wrapped on another side surface of the first rear support tube 1121d. The first extension 1126c and the second extension 1126f cooperatively define a V-shaped structure along the first rear support tube 1121d. The second mounting plate 1126d is attached to and welded to the first mounting plate 1126a to enhance the strength of the first mounting plate 1126a. At the same time, the motor mounting plate 1126 is welded and fixed together with the two sides of the first rear support tube 1121d by the curved surface of the first extension portion 1126c and the second extension portion 1126f, which can reduce the adverse effect of welding on the strength of the first rear support tube 1121d and appropriately enhance the strength of the first rear support tube 1121d. The edges of the motor mounting plate 1126 are all arc-shaped structures, which can reduce the stress concentration points of the motor mounting plate 1126 and avoid cracks that may affect the strength of the motor mounting plate 1126 due to stress concentration. Alternatively, an extension portion welded and fixed to the first rear support tube 1121d may be only arranged on the first mounting plate 1126a, and a mounting portion (the second mounting portion 1126e) may be only arranged on the second mounting plate 1126d. The second mounting plate 1126d is only welded and fixed together with the first mounting plate 1126a, and not directly welded and fixed together with the first rear support tube 1121d. Alternatively, an extension portion welded and fixed to the first rear support pipe 1121d may be only arranged on the second mounting plate 1126d, and a mounting portion (the first mounting portion 1126b) may be only arranged on the first mounting plate 1126a. The first mounting plate 1126a is only welded and fixed together with the second mounting plate 1126d, and not directly welded and fixed together with the first rear support tube 1121d. Another motor mounting plate 1126 is symmetrically arranged on the second rear support tube 1121f. In this embodiment, the strength of the middle frame 112 is reinforced by the side tube reinforcement plate 1122, the support tube reinforcement plate 1125, the motor mounting plate 1126, the side support mounting seat 1123, and the frame nameplate mounting seat 1124, which ensures that the strength of the middle frame 112 is comparable to that of a straddle-type motorcycle. At the same time, the strength of the middle frame 112 is also reinforced by changing the welding position and welding method of each structure, thereby enhancing the strength of the frame without increasing the weight of the frame.

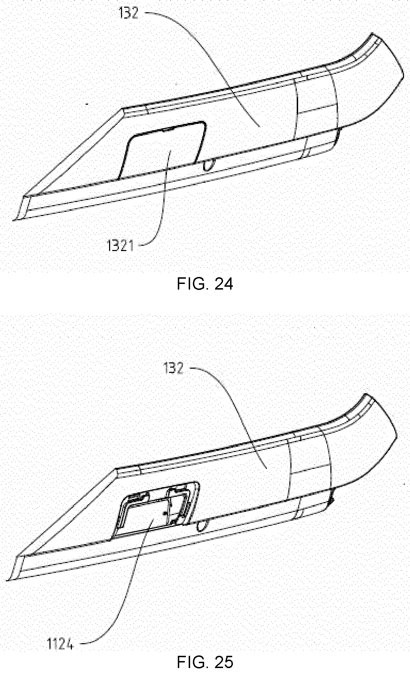

In one embodiment, as shown in FIG. 21, a frame nameplate mounting seat 1124 for mounting a frame nameplate is arranged on the lower side of the middle frame 112. As shown in FIG. 24, a nameplate cover 1321 is arranged on the side vehicle cover 132 corresponding to the frame nameplate mounting seat 1124. The nameplate cover 1321 is connected to the side vehicle cover 132 by a buckle or a rotating shaft 1611a, and can be opened or removed outward (as shown in FIG. 25). The nameplate cover 1321 may or may not be flush with the side vehicle cover 132, and the color and pattern on the surface of the nameplate cover 1321 are the same or different from the side vehicle cover 132. The frame nameplate is important for motorcycles, which records the unique information of the vehicle, and the information is prohibited from being modified or smeared. However, the information recorded on the frame nameplate and frame nameplate is rarely used in daily life, and is usually only used in a few occasions such as vehicle registration or ownership transfer. The frame nameplate needs to be positioned in a more prominent position on frame 11 to comply with relevant regulations. In existing motorcycles, the frame nameplate is directly exposed and installed on the side vehicle cover or fixed directly on the frame through rivets. Such exposed nameplates are prone to environmental erosion and damage, making it difficult to read vehicle information. In addition, the frame nameplate is generally a silver white metal plate engraved with information, the color of the nameplate is different from the vehicle cover, which affects the uniformity and aesthetics of the vehicle appearance. A nameplate cover 1321 that can be opened outward is installed outside the frame nameplate mounting seat 1124. It can not only open the nameplate cover 1321 when needed to obtain information on the frame nameplate, but also isolate the frame nameplate from the external environment in normal times, ensuring that the frame nameplate is not corroded by the external environment. The nameplate cover 1321 is allowed to be modified and painted as it does not contain information. The nameplate cover 1321 and the surrounding vehicle cover 13 can be designed uniformly as needed, thereby ensuring the uniformity of the vehicle appearance and overall aesthetics. It should be noted that the nameplate cover 1321 may also be configured to have different colors, shapes, and patterns from side vehicle cover 132 according to the corresponding design requirements or personal demand.

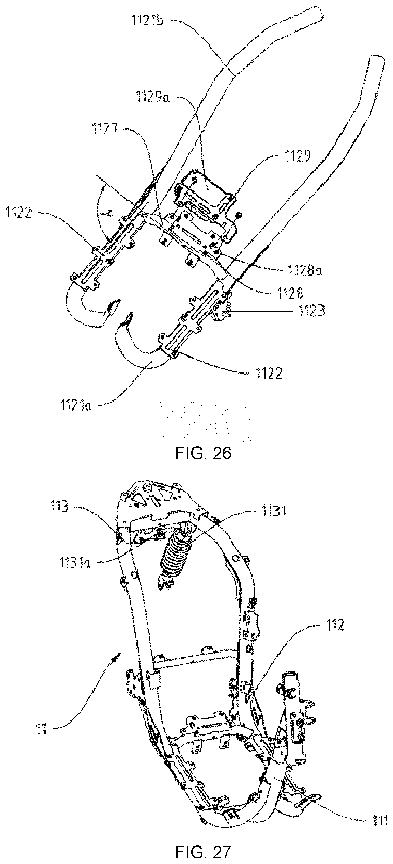

In one embodiment, as shown in FIG. 26, an electrical appliance installation crossbar 1127 is arranged between the two longitudinal tubes 1121 of the middle frame 112. The electrical appliance installation crossbar 1127 is substantially perpendicular to the longitudinal tubes 1121. Further, the electrical appliance installation crossbar 1127 and the longitudinal tube 1121 cooperatively define an angle γ in the range from 70 degrees to 110 degrees. An installation bracket coupling plate 1128 is arranged on the electrical appliance installation crossbar 1127. The electrical appliance 1129a is fixedly connected to an installation bracket 1129, and then the installation bracket 1129 is fixedly connected to the installation bracket coupling plate 1128. The installation bracket coupling plate 1128 is welded to the frame 11. The electrical appliance 1129a is fixedly connected to an installation bracket 1129 by means of detachable connections such as bolts. The installation bracket 1129 is fixedly connected to the installation bracket coupling plate 1128 by means of detachable connections such as bolts. A structure for positioning the electrical appliance is arranged on the installation bracket 1129 and a mechanism for positioning the installation bracket is arranged on the installation bracket coupling plate 1128. In existing motorcycles, the installation bracket is generally directly welded to the frame, and then the electrical appliances are directly installed on the installation bracket. In this embodiment, an installation bracket coupling plate 1128 is installed on the frame 11 to fix the installation bracket 1129. Firstly, the electrical appliance 1129a is fixedly connected to the installation bracket 1129, and secondly the installation bracket 1129 is fixedly connected to the installation bracket coupling plate 1128. In the first step of installation, regardless of whether the electrical appliance 1129a needs to be installed above or below the installation bracket 1129, it can be assembled from the appropriate direction. After assembling the electrical appliance 1129a with the installation bracket 1129, subsequent assembly can be carried out. In the second installation process, the installation direction can be designed according to the space size of the frame 11 and the electrical appliance 1129a. It can be assembled from bottom to top, from top to bottom, or from the side. A structure for positioning the installation bracket 1129 is arranged on the installation bracket 1128. After the positioning is completed, the positioning structure that cooperates with each other has a certain load-bearing capacity, which can temporarily support the installation bracket 1129 installed with electrical appliance 1129a. Then, the installation bracket 1129 is fixed together with the installation bracket coupling plate through bolts and other connection methods. Although this assembly method adds steps, it changes the installation form and direction of the electrical appliance 1129a, which can adjust the assembly form suitable for the frame 11, so that the installation and assembly of the electrical appliance can be completed by one person, solving the problem of difficult assembly of the electrical appliance 1129a due to the limited space of the frame 11 in the existing motorcycles.

In one embodiment, as shown in FIG. 27, the scooter-type motorcycle 100 includes a rear shock absorber 1131 arranged on the rear frame 113, with one end of the rear shock absorber 113 pivotally coupled to the shock absorber mounting seat 178 (shown in FIGS. 2 and 9), and the other end of the rear shock absorber 113 fixedly connected to the rear frame 113. When the rear shock absorber 1131 is fixedly connected to the rear frame 113, the shock absorber fasteners 1131a fixes the rear shock absorber 1131 to the rear frame 113 from the inside of the rear frame 113 towards the outside of the rear frame 113. In the existing motorcycles, the fixing of the rear shock absorber 1131 and the frame is done by installing shock absorber fasteners 1131a from the outside to the inside of the frame. Compared to the inside of the frame, the outside of the frame has larger assembly space and smaller assembly difficulty. For the motorcycles in this application, the front vehicle cover, the side vehicle cover and the rear vehicle cover are connected together, and the rear shock absorber is positioned on the rear vehicle cover, the front vehicle cover and the middle vehicle cover need to be removed before the rear vehicle cover near the rear shock absorber can be removed, which undoubtedly increases the maintenance difficulty of the rear shock absorber. In this embodiment, the assembly method between the rear shock absorber 1131 and the frame is from the inside of the frame to the outside of the frame. When the rear shock absorber 1131 needs to be maintained later, disassembly and maintenance of the rear shock absorber 1131 can be achieved without disassembling the rear body cover 133, which can improve the convenience and efficiency of after-sales service. After the assembly is completed, the box body of the storage box 162 covers the installation points of the rear shock absorber 1131 and the frame. The box body of the storage box 162 defines a disassembly hole for the rear shock absorber 1131 for easy maintenance of rear shock absorber 1131, with a cover plate covering the disassembly hole. When the rear shock absorber 1131 needs to be dismantled, the cover plate can be pulled open. which can not only facilitate the disassembly and maintenance of the rear shock absorber 1131, but also have the aesthetic effect of covering the disassembly holes.

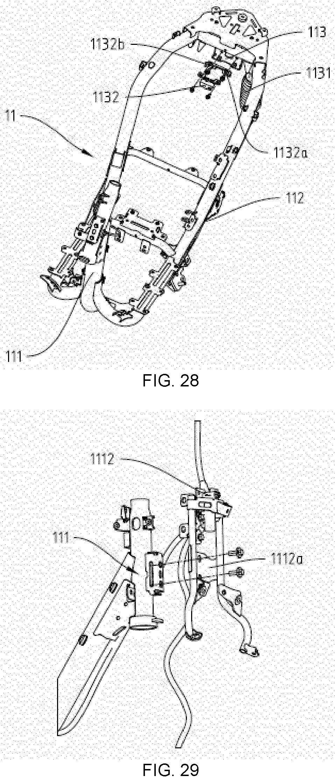

In one embodiment, as shown in FIG. 28, the scooter-type motorcycle 100 includes an On Board Diagnostics (OBD) device arranged on the rear frame 113 by an OBD bracket. An OBD bracket positioning mechanism 1132b is arranged on the rear frame 113. The box body of the storage box 162 also covers the installation points of the OBD device 1132 and the rear frame 113. The box of the vehicle storage box 162 defines an OBD port for the OBD device 1132, with a protective cover covering the OBD port. The OBD device is generally positioned at the bottom of the foot pedal due to its large volume in the existing scooter-type motorcycles. The full name of OBD is On Board Diagnostics, and OBD device is a type of vehicle fault detection device. Although OBD devices are not frequently used, they play a significant role in vehicle fault detection. When a vehicle malfunctions, after-sales personnel usually use external devices to read the fault information inside the OBD device in order to connect to the vehicle's fault status. When the OBD device is mounted at the bottom of the foot pedal, it is often eroded by splashed sand, stones, and water during running of the motorcycles, leading to interface damage and even damage to the OBD device. In addition, it also increases the corresponding difficulty in reading vehicle fault information if the OBD device is mounted below the foot pedal. In this embodiment, the OBD device 1132 is mounted at the rear of rear frame 113, which is relatively high and less susceptible to erosion from sand, stones, and water splashing during the running of the motorcycles. At the same time, due to being within the space defined by the vehicle cover 13 and seat cushion 161, it is also less susceptible to rainwater or water intrusion, which can ensure that OBD device 1132 is not easily damaged and also makes it more reliable and durable. The OBD device 1132 is in a position that will not interfere with the disassembly of the rear shock absorber 1131, thereby ensuring the normal use of the OBD device 1132 and ensuring that the disassembly of the rear shock absorber 1131 is not affected by the OBD device 1132. The OBD port used for connecting external devices to the OBD device 1132 to obtain corresponding fault information is defined in the box body of the storage box 162. The storage box 162 can be easily opened, and the OBD port is defined in the storage box 162, which facilitates the reading of information during the after-sales process, thereby increasing the efficiency of after-sales service. A protective cover covers the OBD port to prevent dust and other debris from entering the OBD port in storage box 162, thereby ensuring cleanliness and ensuring that other items placed in storage box 162 do not cause damage to the OBD port.

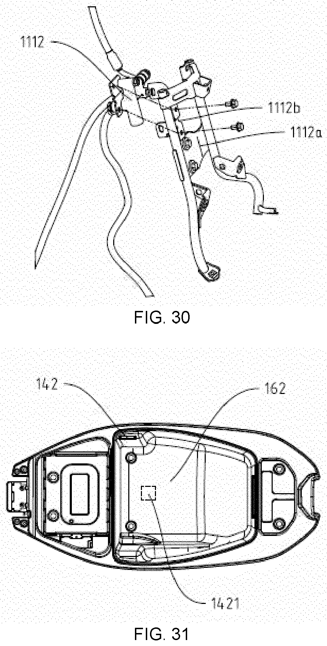

In one embodiment, as shown in FIG. 29, the electric scooter-type motorcycle includes a CBS delay valve 1112 arranged on the front frame 111. The CBS delay valve 1112 is positioned adjacent to the headlight assembly 141. The CBS delay valve 1112 is connected to the front frame 111 by a CBS bracket 1112a. As shown in FIG. 30, a CBS positioning mechanism 1112b is arranged on the front frame 111. The CBS delay valve involves the braking system, which needs to connect numerous pipelines, including some important brake oil lines. These brake oil lines have weak bending ability and a small range of movement, which further limits the movable range of the CBS delay valve during installation. At the same time, the CBS delay valve is installed on the front frame and adjacent to the headlight assembly including high beam, low beam, and left and right turn signals, therefore, the position allowed for CBS delay valve installation is relatively narrow, and the CBS delay valve is difficult to install. In one embodiment, as shown in FIG. 29, The CBS bracket 1112a is connected to the front frame 111 by means of detachable connections such as fasteners. The CBS delay valve 1112 is connected to the CBS bracket 1112a by means of detachable connections such as fasteners. The CBS delay valve 1112 is fixedly connected to the CBS bracket 1112a firstly, and then the CBS bracket 1112a is connected to the front frame 111 by a CBS positioning mechanism 1112b. The installation of the CBS delay valve 1112 has a larger installation space without the interference of the pre-welded CBS bracket 1112a, which can reduce the installation difficulty of CBS delay valve 1112, improve the installation efficiency and maintenance efficiency of the CBS delay valve 1112. In this embodiment, due to the reduction of the activity space required for the installation of CBS delay valve 1112, it can make the components near CBS delay valve 1112 more compact or free up space to install other components, thereby helping to reduce the size of the electric scooter-type motorcycle.

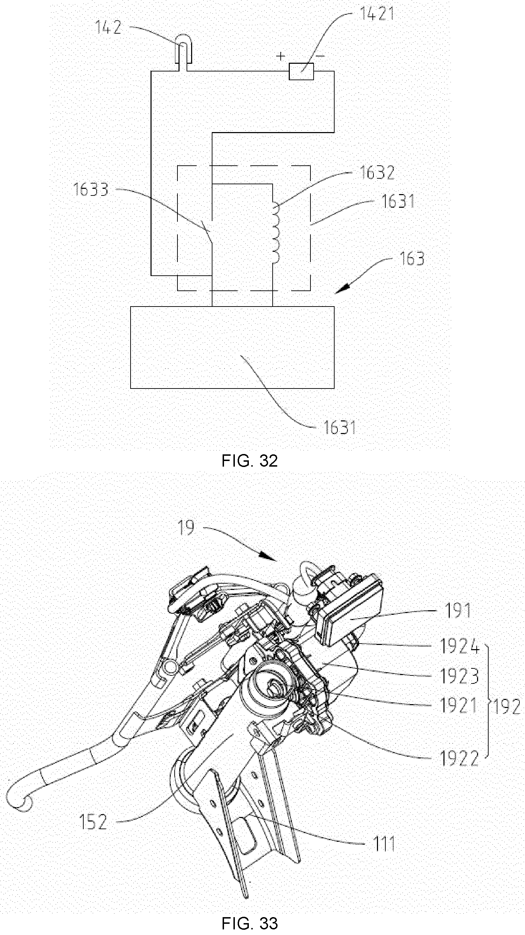

In one embodiment, as shown in FIG. 31, the seat cushion assembly 16 includes a seat cushion 161 (as shown in FIG. 2) and a storage box 162 below the seat cushion 161. The seat cushion 161 is positioned above the storage box 162. When the seat cushion 161 is opened, the storage box 162 is open and articles can be retrieved from the storage box 162. A storage box light 142 for lighting inside the storage box 142 is arranged inside the storage box 162, which facilitates users to search for articles in the storage box 162 in low light conditions and solves the problem of inconvenient searching for articles due to the lack of lighting in the existing storage box 162. As shown in FIG. 32, turning on and/or turning off the storage box light 142 is linked to the unlocking and/or locking of the seat cushion lock 163. When the seat cushion lock 163 is unlocked, the seat cushion 161 is opened and the storage box light 142 is turned on. The storage box light can be turned on and off according to the switch of the seat cushion, and can be controlled by software logic. For example, when the seat cushion lock is unlocked, the seat cushion lock sends a seat cushion lock unlocking signal to the vehicle controller. The seat cushion lock unlocking signal is associated with a storage box light turning on signal. The vehicle controller controls the storage box light to turn on. When the seat cushion lock is locked, the seat cushion lock sends a seat cushion lock locking signal to the vehicle controller. The seat cushion lock locking signal is associated with a storage box light turning off signal, however, which requires additional equipment and modules, as well as additional wiring harnesses, which increases the manufacturing cost of the motorcycle. In this embodiment, turning on or turning off the storage box light 142 is controlled by the seat cushion lock 163. The seat cushion lock 163 may include an electronic lock 1631, an electronic lock-driving device 1632 for driving the electronic lock 1631, and a first switch 1633. When the electronic lock 1631 is unlocked, the first switch 1633 is conductive to ground. The storage box light 142 is connected in series at both ends of the first switch 1633, which controls the conduction and disconnection of the lights. The electronic lock-driving device 1632 may be an electromagnetic valve. When the seat cushion lock 163 is unlocked, the first switch 1633 of seat cushion lock 163 is closed, and the current from the battery 1421 passes through the storage box light 142 and the first switch 1633 of seat cushion lock 163 to form a circuit, causing the storage box light 142 to turn on. When seat cushion lock 163 is locked, the first switch 1633 of the seat cushion lock 163 is opened, the circuit cannot be formed, and the storage box light 142 is turned off. The vehicle controller 18 includes a function module capable of driving the unlocking of seat cushion lock 163.

When the seat cushion 161 is opened, the first switch 1633 of seat cushion lock 163 is conductive to ground, and the current from the battery 1421 passes through the storage box light 142 and the first switch 1633 of seat cushion lock 163 to form a circuit, causing the storage box light 142 to turn on. In this embodiment, the circuit of the storage box light 142 is directly connected to the control circuit of the seat cushion lock 163. The first switch 1633 of the seat cushion lock 163 is simultaneously used as the switch of the storage box light 142, and the switch feedback of the first switch 1633 inside the seat cushion lock 163 is used as the switch of the storage box light 142, which does not require the use of complex logical settings, can omit corresponding devices and modules involved in logical processing, and can also reduce the use of wiring harnesses, lower costs, and maintenance costs in the later stage.

In one embodiment, as shown in FIG. 33, the lock assembly 19 may include a vehicle lock device 191 and a steering lock device 192. In this embodiment, the vehicle lock device 191 may be an NFC device. The user provides a vehicle lock signal by swiping a NFC card that uniquely corresponds to the electric scooter-type motorcycle 100 on the NFC device. When the electric scooter-type motorcycle 100 is in a locked state, the vehicle lock signal provided by the user is an unlocking signal to unlock the steering lock device 192. When the electric scooter-type motorcycle 100 is in an unlocked state, the vehicle lock signal provided by the user is a locking signal to lock the steering lock device 192. The steering lock device 192 includes a steering column 152 defining a locking hole 1921, a locking tongue 1922, a locking motor 1923 for controlling the movement of the locking tongue 1922, and a locking motor control module 1924 for controlling the movement of the locking motor 1923. The locking motor 1923 drives the locking tongue 1922 to extend and retract. The steering column 152 is in a locked state when the locking tongue 1922 extends into the locking hole 1921 defined in the steering column 152. The steering column 152 is in an unlocked state when the locking tongue 1922 retracts outside the locking hole 1921 defined in the steering column 152. The first sensor 1924d is a dual Hall sensor capable of determining whether the locking tongue 1922 extending outside of the locking hole 1921 and sending the judgment information to the locking motor control module 1924 or directly to the vehicle controller 18. The locking motor 1923 may drive the locking tongue 1922 by means of worm and gear mechanism. At least portion of the locking tongue 1922 is a worm, and the locking motor 1923 is connected to a gear. The locking motor 1923 drive the gear to rotate. The rotational motion is converted into a telescopic motion along the direction of the locking tongue 1922 to drive the locking tongue 1922. The locking motor 1923 may drive the locking tongue 1922 by means of spring and cam mechanism. A spring for retracting the locking tongue 1922 is arranged on the locking tongue 1922. The locking motor 1923 drive a cam to rotate, and the protruding portion of the cam contacts the locking tongue 1922 to push out the locking tongue 1922 to pass through the locking hole 1921 defined in the steering column 152, and then the steering column 152 is in the locked state. The locking motor 1923 may drive the locking tongue 1922 by means of linkage. The locking motor 1923 is fixedly connected to a driving wheel, which is hinged to a link arm, and the link arm is hinged to the end of the locking tongue 1922. The locking motor 1923 drives the driving wheel to rotate, and the driving wheel drives the link arm to drive the locking tongue 1922 to move in a straight line to control the extension or retraction of the locking tongue 1922, achieving the locking and unlocking of the locking tongue 1922.

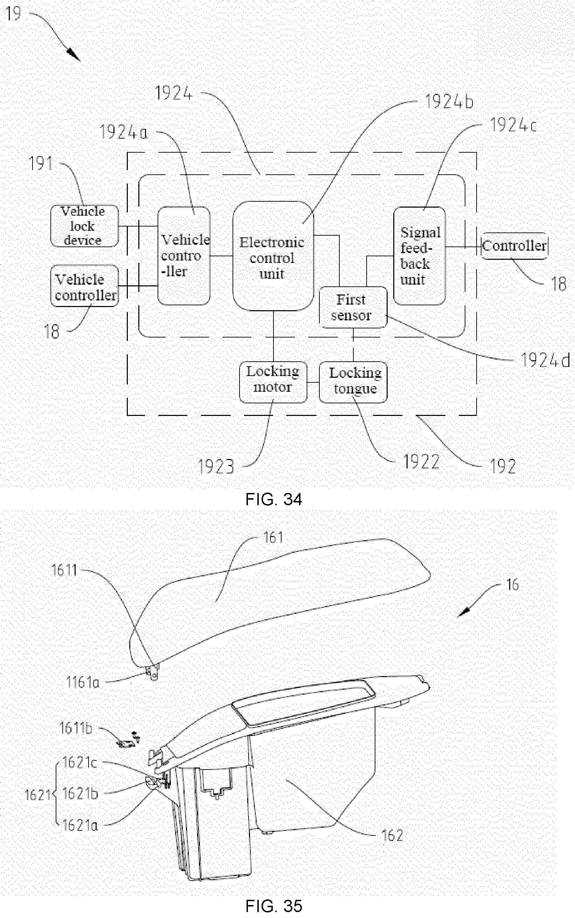

As shown in FIG. 34, the locking motor control module 1924 includes a signal receiving unit 1924a, an electronic control unit 1924b, a signal feedback unit 1924c, and a first sensor 1924d for determining whether locking tongue 1922 being extended. The first sensor 1924d is a dual Hall sensor capable of determining whether the locking tongue 1922 extending outside of the locking hole 1921 and sending the judgment information to the motor control module 1924 or directly to the vehicle controller 18. The signal receiving unit 1924a is connected to the lock assembly 19 and is capable of receiving a vehicle lock signal from the lock assembly 19. The vehicle lock signal includes a locking signal and an unlocking signal. The signal receiving unit 1924a is also connected to the vehicle controller 18 and is capable of obtaining the vehicle velocity signal and motor rotational speed signal. The locking motor control module 1924 is capable of determining whether to extend the locking motor 1923 to drive the locking tongue 1922 to lock the steering column 152 based on the vehicle lock signal, the vehicle velocity signal, and the motor rotational speed signal received by the signal receiving unit 1924a. The locking motor control module 1924 determines the vehicle lock signal, the vehicle velocity signal, and the motor rotational speed signal. When the electric scooter-type motorcycle100 is in the unlocked state, the lock assembly 19 provides a locking signal. The signal receiving unit 1924a receives the locking signal, and if the vehicle velocity signal and the motor rotational speed signal are zero, then the locking motor control module 1924 controls the locking motor 1923 to work, causing the locking tongue 1922 to extend out of the locking hole 1921, locking the steering column 152, and achieving the locking operation. The locking motor control module 1924 needs to combine the locking signal with the vehicle velocity signal and the motor rotational speed signal to determine whether to output a control signal to the locking motor 1923 to drive the locking tongue 1922 to extend into the locking hole 1921 and to lock the steering column 152 in order to prevent accidental triggering of the locking signal of lock assembly 19 during running to avoid dangers. In some cases, when the steering lock device 192 receives the locking signal to lock the steering column, the locking tongue 1922 cannot extend into the locking hole 1921 and cannot complete the locking operation due to the mis-alignment between the locking hole 1921 of the steering column 152 and the locking tongue 1922. The first sensor 1924d determines the locking tongue 1922 that the locking tongue 1922 has not extended, and the signal feedback unit 1924c sends a signal to the vehicle controller 18 that the steering lock device 192 is not locked. After receiving the unlocking signal from the locking device, the vehicle controller 18 displays the unlocking signal on the human-computer interaction interface, prompting the user to adjust the angle of the steering column 152 to lock it.

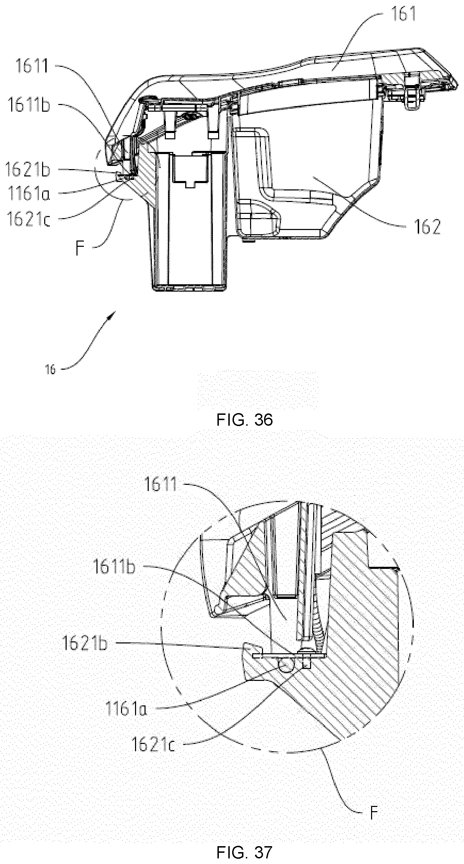

In one embodiment, as shown in FIGS. 35 and 36, the seat cushion assembly 16 may include a seat cushion 161 and a storage box 162 located under the seat cushion 161. The storage box 162 is positioned on the frame 11 and fixedly connected to frame 11. The front end of seat cushion 161 is hinged to the front end of storage box 162. The rear end of seat cushion 161 and the rear end of storage box 162 may be locked by a seat cushion lock 163. A rotation shaft fixing device 1621 is arranged on the front end of the storage box 162 and the rotation shaft fixing device 1621 defines a rotation shaft mounting groove 1621a. A rotation shaft bracket 1611 is arranged below the seat cushion 161, and a rotation shaft 1611a matched with the rotation shaft mounting groove 1621a is arranged at one end of the rotation shaft bracket 1611. The rotation shaft 1611a is mounted in the rotation shaft mounting groove 1621a. A rotation shaft fixing plate for limiting the rotation shaft 1611a within the rotation shaft mounting groove 1621a of the rotation shaft fixing device 1621 in order to prevent the rotation shaft 1611a from falling off is detachably arranged on the rotation shaft bracket 1611. The existing seat cushion is unremovably connected to the storage box, and the seat cushion 161 and the storage box can only be replaced together, which increases the cost of later maintenance. In one embodiment, as shown in FIG. 37, the rotation shaft fixing device 1621 defines a fixing plate slot 1621b and a fixing plate mounting hole 1621c positioned on either side of the rotation shaft mounting groove 1621a, respectively. The fixing plate slot 1621b is positioned more forward than the fixing plate mounting hole 1621c along the vehicle front-rear direction. The seat cushion 161 is flipped forward. After the seat cushion 161 is opened, the space in the front of the rotation shaft 1611a is relatively small. If the rotation shaft fixing plate 1611b is completely connected to the shaft fixing device 1621 by fasteners, it is very difficult to install fasteners due to the small space, thereby increasing the difficulty of assembly and later maintenance. The front end of the rotation shaft fixing plate 1611b is more easily inserted into the fixing plate slot 1621b because the fixing plate slot 1621b is positioned more forward. Then the rotation shaft fixing plate 1611b is fixed together with the rotation shaft fixing device 1621 by means of fasteners and fixing plate mounting hole 1621c positioned more rearward to limit the range of movement of the rotation shaft 1611a. The connection method of the rotation shaft 1611a in this embodiment can ensure good fixation between rotation shaft 1611a and rotation shaft fixing device 1621 without detachment, and also reduce the difficulty of disassembly and assembly during later maintenance, facilitating the installation and disassembly between seat cushion 161 and storage box 162.

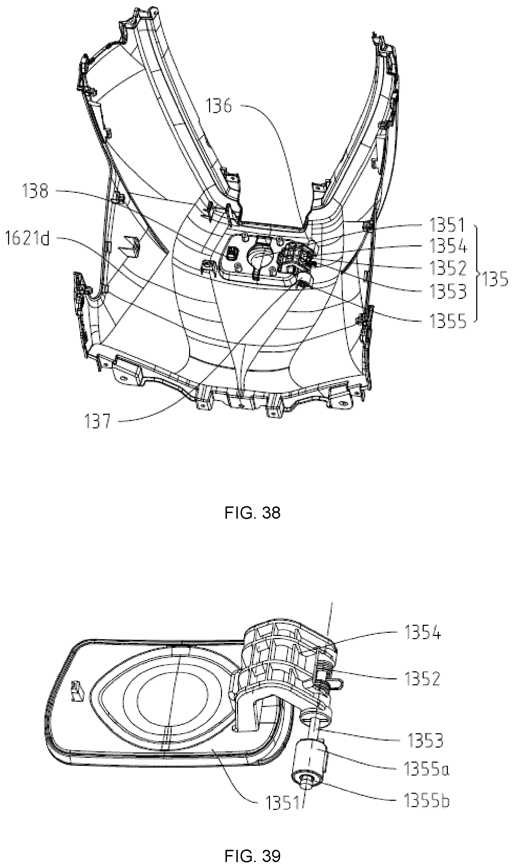

In one embodiment, as shown in FIG. 38, the outer wall of the storage box 1621d defines a charging port with a charging port cover assembly 135 for covering the charging port. The charging port cover assembly 135 is fixed on the charging cover fixing seat 136 on the inner surface of the storage box outer wall 1621d around the charging port. The charging port cover assembly 135 may include a covering plate 1351, a torsion spring 1352, a hinge 1354, and a damper 1355. As shown in FIG. 39, the damper 1355 may include an outer shell layer 1355a and an inner core 1355b. The outer shell layer 1355a of the damper 1355 is connected to a damper fixing seat 137 on the storage box outer wall 1621d, and the inner core 1355b of the damper 1355 is fixedly connected to the hinge 1354. The outer shell layer 1355a of the damper 1355 is fixed to the damper fixing seat 137 without relative movement. The inner core 1355b of the damper 1355 can rotate under the drive of hinge 1354. One end of hinge 1354 is fixed to the charging cover fixing seat 136 on the outer wall of the storage box 1621d by a torsion spring 1352 and a pin shaft 1353. The other end of the hinge 1354 is fixed to the charging cover plate 1351. A lock catch 138 for fixing the covering plate 1351 is arranged on the storage box outer wall 1621d. A damping member is installed between the outer shell layer 1355a and the inner core 1355b of the damper 1355 to prevent the relative motion trend of the outer shell layer 1355a and the inner core 1355b. The charging port cover assembly 135 can provide protection for the charging port and related devices inside the charging port when charging is not needed, preventing rainwater and dust from damaging related devices. If the charging port cover assembly is only hinged on the inner wall of the storage box around the charging port, which can also protect the charging port and related devices inside the charging port. However, this simple setting requires manual opening of the charging port cover assembly. For charging ports located in hidden parts of the vehicle, this opening method will inevitably increase the difficulty of opening the charging port and reduce the convenience of opening. A torsion spring is added to the hinge position of the charging port cover assembly, so that the locking state of the charging port cover assembly can be released, and the charging port cover assembly can be opened on its own under the action of the torsion spring, increasing the convenience of opening the charging port cover assembly. However, the elastic force of the torsion spring is instantly released when the charging port cover assembly is opened, which will generate an instantaneous impact force on the charging port cover assembly, easily causing damage to the charging port cover assembly and reducing its service life. In this embodiment, a damper 1355 is provided to cooperate with the torsion spring 1352 to convert the instantaneous release of the torsion spring 1352 into slow or uniform release, reducing the damage caused by the instantaneous release of the torsion spring 1352 to the charging port cover assembly 135, protecting the charging port cover assembly 135, and making the charging port cover assembly 135 have a longer service life. The outer shell layer 1355a of the damper 1355 defines at least one protrusion or rib arranged radially, and the inner side of the damper fixing seat 137 defines at least one indentation and groove matched with the outer shell layer 1355a of the damper 1355. When the outer shell layer 1355a of damper 1355 has a rotational trend, the above-mentioned structures can prevent the outer shell layer 1355a of damper 1355 from rotating. The inner core 1355b end face of the damper 1355 defines at least one pair of protrusions arranged radially, and corresponding indentations are defined at the hinge 1354 position that matches the inner core 1355b. The inner core 1355b of the damper 1355 and hinge 1354 of can rotate together through the matching structure mentioned above. In the charging port cover assembly 135, after the torsion spring 1352 is released, the hinge 1354 rotates. The rotation of hinge 1354 drives the inner core 1355b of the damper 1355 to rotate, while the outer shell layer 1355a of damper 1355 is always fixed and relatively stationary with the damper fixing seat 137 on the vehicle cover 13. At this point, the inner core 1355b of the damper 1355 undergoes relative motion with the outer shell layer 1355a, and the damping device between the inner core 1355b of damper 1355 and the outer shell layer 1355a will slow down this relative motion, increase the resistance to rotation of the inner core 1355b of the damper 1355, and thereby increasing the resistance to rotation of hinge 1354, solving the problem of hinge 1354 quickly popping open when the torsion spring 1352 is instantly released, and reducing damage to the hinge 1354 and charging port cover assembly 135.

It should be noted that the specific embodiments described herein are used to illustrate this application, not to limit the application. The scope of the present invention is defined by the appended claims.

## Claims

1. An electric scooter-type motorcycle (100) comprising
a frame (11);
a steering assembly (15) at least partially connected to the frame (11);
a lock assembly (19) at least partially mounted on the frame (11);
a vehicle cover (13) at least partially connected to the frame (11);
a vehicle controller (18) at least partially connected to the lock assembly (19);
a seat cushion assembly (16) at least partially connected to the frame (11);
a wheel assembly (12) at least partially connected to the frame (11);
a drive assembly (17) for driving the wheel assembly (12), the drive assembly (17) comprising a drive motor (172);
a power battery for supplying electric power for the drive motor (172);
wherein,
the drive assembly (17) comprises:
a drive control unit (173) electrically coupled to the drive motor (172) for controlling the drive motor (172);
a drive train (174) at least partially connected to the drive motor (172) for reducing rotational speed and increasing torque of the power output by the drive motor (172); and
a housing (171) defining at least one accommodation space comprising a first chamber (1713) and a second chamber (1711) defined at the same side of the housing (171), and a third chamber (1712) defined at the other side of the housing (171); the drive motor (172), the drive control unit (173), and the drive train (174) being at least partially located within the accommodation space and extend in a second direction that is substantially parallel to a front-rear direction of the electric scooter-type motorcycle (100),
**characterized in that**
the ratio of a length (L1) of the drive assembly (17) extending in the second direction to the length (L2) of the electric scooter-type motorcycle (100) extending in the front-rear direction is in the range from 0.22 to 0.33;
the rotational speed of the drive motor (172) is in a range from 9000 rpm to 12000 rpm; and
the transmission ratio of the drive train (174) being in the range from 9 to 12.

2. The electric scooter-type motorcycle (100) of claim 1, wherein a first through-hole (1714) is defined between the second chamber (1711) and the third chamber (1712), and a second through-hole (1715) is defined between the second chamber (1711) and the first chamber (1713); the drive motor (172) is electrically coupled to the drive control unit (173) by the second through-hole (1715), the drive motor (172) comprises a first output shaft (1721), and the drive train (174) comprises a first input end (1741); the first output shaft (1721) is partially connected to the first input end (1741) by the first through-hole (1714).

3. The electric scooter-type motorcycle (100) of claim 1, wherein the drive assembly (17) further comprises a first cover plate (1716) fixed at the side where the first chamber (1713) is located, a second cover plate (1717) fixed at the side where the second chamber (1711) is located, and a third cover plate (1718) fixed at the side where the third chamber (1712) is located; the first cover plate (1716) and the housing (171) collectively define a first substantially closed space where the drive control unit (173) is at least partially contained; the second cover plate (1717) and the housing (171) collectively define a second substantially closed space where the drive motor (172) is at least partially contained; and the third cover plate (1718) and the housing (171) collectively define a third substantially closed space where the drive train (174) is at least partially contained.

4. The electric scooter-type motorcycle (100) of claim 1, wherein the steering assembly (15) comprises a steering column (152) and a locking hole (1921) is defined on the steering column (152); the lock assembly (19) is capable of obtaining a vehicle lock signal and is capable of locking or unlocking the electric scooter-type motorcycle (100) based on the vehicle lock signal; when the lock assembly (19) is in an abnormal locking or unlocking state, the lock assembly (19) transmits corresponding abnormal locking or unlocking signals to the vehicle controller (18), the vehicle controller (18) controls the electric scooter-type motorcycle (100) to send a warning information after receiving the abnormal locking or unlocking signals, the lock assembly (19) comprises a vehicle lock device (191) and a steering lock device (192), wherein the vehicle lock device (191) is capable of obtaining user's vehicle lock signal and transmitting the vehicle lock signal to the steering lock device (192), and the steering lock device (192) performs locking or unlocking operations based on the vehicle lock signal; the steering lock device (192) comprises a locking tongue (1922), a locking motor (1923) for controlling the movement of the locking tongue (1922), a locking motor control module (1924) for controlling the movement of the locking motor (1923), and a first sensor (1924d) for determining whether the locking tongue (1922) being extended; when the locking tongue (1922) being extended, at least a portion of the locking tongue (1922) passes through the locking hole (1921) and enters the steering column (152), causing the steering column (152) to be in a locked state; the vehicle lock device (191) is electrically coupled to the locking motor control module (1924) and transmits the vehicle lock signal to the locking motor control module (1924), the vehicle lock signal comprises a locking signal and an unlocking signal.

5. The electric scooter-type motorcycle (100) of claim 4, wherein the first sensor (1924d) is a Hall sensor; the first sensor (1924d) determines whether the locking tongue (1922) penetrates into the steering column (152) through the locking hole (1921) and feeds back the judgment result to the vehicle controller (18); after the steering lock device (192) receiving the locking signal from the vehicle lock device (191), if the first sensor (1924d) determines that at least portion of the locking tongue (1922) entering the locking hole (1921) defined in the steering column (152), then a signal feedback unit (1924c) sends a signal indicating that the steering lock device (192) being locked properly to the vehicle controller (18); if the first sensor (1924d) determines that the locking tongue (1922) not entering the locking hole (1921) defined in the steering column (152), then the signal feedback unit (1924c) sends a signal indicating that the steering lock device (192) not being locked properly to the vehicle controller (18); the vehicle controller (18) controls the electric scooter-type motorcycle (100) to send a warning message.

6. The electric scooter-type motorcycle (100) of claim 4, wherein the locking motor control module (1924) comprises a signal receiving unit (1924a), a motor control unit, and a signal feedback unit (1924c); the signal receiving unit (1924a) is electrically coupled to the vehicle lock device (191) for receiving the vehicle lock signal from the vehicle lock device (191) and is also electrically coupled to the vehicle controller (18) for obtaining a vehicle velocity signal and a motor rotational speed signal of the electric scooter-type motorcycle (100); the locking motor control module (1924) is electrically coupled to the signal receiving unit (1924a) and is capable of determining whether to drive the locking motor (1923) to extend the locking tongue (1922) and lock the steering column (152) based on the vehicle lock signal, the vehicle velocity signal, and the motor rotational speed signal; when the vehicle lock signal is the locking signal and the vehicle velocity and the motor rotational speed are zero, the locking motor control module (1924) is capable of controlling the locking motor (1923) to work so that the locking tongue (1922) is at least partially extended and locks the steering column (152).

7. The electric scooter-type motorcycle (100) of claim 6, wherein when the vehicle velocity is greater than zero or the motor rotational speed is greater than zero, the locking motor control module (1924) is capable of controlling the locking motor (1923) to stop working so that the locking tongue (1922) is completely outside the steering column (152).

8. The electric scooter-type motorcycle (100) of claim 1, further comprising a power distribution unit (177) comprising a first type of terminal connection port (1771), a second type of terminal connection port (1772), a wiring harness, a wiring harness guide device (1778) for guiding the wiring harness, and a wiring harness fixing device (1779) for fixing the wiring harness, wherein the wiring harness comprises a high-voltage wiring harness and a low-voltage wiring harness, one end of the high-voltage wiring harness is electrically coupled to the first type of terminal connection port (1771), and the other end of the high-voltage wiring harness is electrically coupled to the second type of terminal connection port (1772); the wiring harness fixing device (1779) comprises a first type wiring harness fixing device (1779a) for fixing the high-voltage wiring harness and a second type wiring harness fixing device (1779b) for fixing the low-voltage wiring harness, with at least a portion of the second type wiring harness fixing device (1779b) connected to one side of the wiring harness guide device (1778); the first type of terminal connection port (1771) is connected to the wiring terminal of the drive control unit (173), and the second type of terminal connection port (1772) is electrically coupled to the power battery; the first type of terminal connection port (1771) comprises a first terminal connection port (1771a), a second terminal connection port (1771b), and a third terminal connection port (1771c) respectively connected to the wiring terminals; the first terminal connection port is (1771a) for high-voltage power supply, the second terminal connection port (1771b) is for control signal, and the third terminal connection port (1771c) is for DC-DC circuit, the second terminal connection port (1771b) and third terminal connection port (1771c) are located at the same side of the first terminal connection port (1771a); the second type of terminal connection port (1772) comprises a fourth terminal connection port (1772a) connected to the power battery, and the fourth terminal connection port (1772a) is for power battery; the high-voltage wiring harness comprises a high-voltage power line (1773), and the low-voltage wiring harness comprises a control signal line (1774), a DC-DC conversion line (1775), a charging line (1776), and a power control line (1777); one end of the high-voltage power line (1773) is electrically coupled to the first terminal connection port (1771a), and the other end of the high-voltage power line (1773) is electrically coupled to the fourth terminal connection port (1772a), one end of the control signal line (1774) is electrically coupled to the second terminal connection port (1771b), and the other end of the control signal line (1774) is electrically coupled to the vehicle controller (18), one end of the DC-DC conversion line (1775) is electrically coupled to the third terminal connection port (1771c), and the other end of the DC-DC conversion line (1775) is electrically coupled to low-voltage electrical appliances or low-voltage power supply.

9. The electric scooter-type motorcycle (100) of claim 8, wherein the first type of terminal connection port (1731) comprises a first terminal connection port (1731), a second terminal connection port (1731), and a third terminal connection port (1731) respectively connected to the wiring terminals; the first terminal connection port (1731) is for high-voltage power supply, the second terminal connection port (1731) is for control signal, and the third terminal connection port (1731) is for DC-DC circuit, the second terminal connection port (1731) and third terminal connection port (1731) are located at the same side of the first terminal connection port (1731); the second type of terminal connection port (1731) comprises a fourth terminal connection port (1731) connected to the power battery, and the fourth terminal connection port (1731) is for power battery.

10. The electric scooter-type motorcycle (100) of claim 1, wherein the drive assembly (17) comprises a cover plate (1718), and the housing (171) and the cover plate (1718) collectively define an accommodation space, the drive train (174) is at least partially provided in the accommodation space and at least partially connected to the wheel assembly (12), and the housing (171) and the cover plate (1718) are connected to each other; at least two caliper mounting holes (1718a) are defined on the cover plate (1718) for installing brake calipers (1718e), and at least one fastener for fixing the housing (171) and the cover plate (1718) together is disposed between the caliper mounting holes (1718a), with one end of the fastener substantially disposed inside the cover plate (1718); the brake calipers (1718e) are connected to the cover plate (1718) and are located on the side of the cover plate (1718) away from the housing (171).

11. The electric scooter-type motorcycle (100) of claim 1, wherein the frame (11) comprises a front frame (111), a middle frame (112), and a rear frame (113); the middle frame (112) is U-shaped and comprises two symmetrical longitudinal tubes (1121a, 1121b), each longitudinal tube (1121a, 1121b) comprises a side tube (1121c, 1121e) and a rear support tube (1121d, 1121f), a side tube reinforcement plate (1122) is mounted on the upper surface of the side tube (1121c, 1121e) and an accessory mounting seat is mounted on the outer side of the side tube (1121c, 1121e), a motor mounting plate (1126) is arranged on the rear support tube (1121d, 1121f), a support reinforcement plate is arranged at the connection between the side tube (1121c, 1121e) and the rear support tube (1121d, 1121f); a welding seam between the side tube reinforcement plate (1122) and the side tube (1121c, 1121e) substantially extends along the side tube (1121c, 1121e), a welding seam between the accessory mounting seat and the side tube (1121c, 1121e) substantially extends along the side tube (1121c, 1121e), and the welding seam between the motor mounting plate (1126) and the rear support tube (1121d, 1121f) substantially extends along the rear support tube (1121d, 1121f); the motor mounting plate (1126) comprises a first mounting plate (1126a) and a second mounting plate (1126d), wherein the first mounting plate (1126a) comprises a first mounting portion (1126b) and a first extension portion (1126c); the second mounting plate (1126d) comprises a second mounting portion (1126e) and a second extension portion (1126f); the second mounting portion (1126e) is adhered to one side of the first mounting portion (1126b); the first extension portion (1126c) is a curved surface that matches one side of the rear support tube (1121d, 1121f), and the first extension portion (1126c) is wrapped and fixed at one side of the rear support tube (1121d, 1121f) by welding; the second extension portion (1126f) is a curved surface that matches the other side of the rear support tube (1121d, 1121f), and the second extension portion (1126f) is wrapped and fixed at the other side of the rear support tube (1121d, 1121f) by welding; and the first extension portion (1126c) and the second extension portion (1126f) collectively define a V-shaped structure along the rear support tube (1121d, 1121f).

12. The electric scooter-type motorcycle (100) of claim 1, wherein the wheel assembly (12) further comprises a rear wheel (122) and a wheel cover (123), and the wheel cover (123) surrounds at least a portion of the rear wheel (122) and is located on one side of the rear wheel (122); a ball race (1231) is arranged on one side of the wheel cover (123) and a ball stud (1221) is arranged on the side of the rear wheel (122) in contact with the wheel cover (123), the ball race (1231) and the ball stud (1221) are matched to fix the wheel cover (123) on one side of the rear wheel (122), wherein the ball stud (1221) is arranged on the wheel hub (1222), rim (1223) or spoke (1224) of the rear wheel (122); the ball race (1231) defines an opening less than the diameter of the ball stud (1221) and has an internal dimension greater than or equal to the diameter of the ball stud (1221).

13. The electric scooter-type motorcycle (100) of claim 1, further comprising
a storage box light (142) at least partially mounted within the seat cushion assembly (16);
wherein the seat cushion assembly (16) comprises a seat cushion (161), a storage box (162) located under the seat cushion (161), and a seat cushion lock (163) for locking the seat cushion (161) and the storage box (162) together; the seat cushion lock (163) comprises an electronic lock (1631) and an electronic lock-driving device (1632) for driving the electronic lock (1631) to lock or unlock the seat cushion (161);
the seat cushion lock (163) further comprises a first switch (1633) that is conductive when the electronic lock (1631) is unlocked, and the storage box light (142) is electrically coupled to the first switch (1633) and is turned on when the first switch (1633) is conductive; the storage box light (142) is further connected in series with a first power source that supplies electric power for the storage box light (142).

14. The electric scooter-type motorcycle (100) of claim 13, wherein when the electronic lock-driving device (1632) unlocks the electronic lock (1631), the first switch (1633) is conductive to ground; when the first switch (1633) is conductive to ground, the storage box light (142) is conductive.

15. The electric scooter-type motorcycle (100) of claim 13, wherein an USB port is arranged inside the storage box (162), a guard assembly (134) is provided to protect the USB port, the guard assembly (134) comprises a guard base (1341) for accommodating the USB port and a guard lid (1342) covering the USB port; the guard base (1341) is fixedly sleeved on the USB port; a female buckle receptacle is arranged on the outer side of the side wall of the guard base (1341) and a male buckle connector matched with the female buckle receptacle is arranged on the inner side of the side wall of the guard lid (1342); the guard base (1341) defines a limit hole (1341a), and a limit column (1342a) matched with the limit hole (1341a) is arranged on the guard lid (1342); an anti-detachment member is arranged at the end of the limit column (1342a); the guard lid (1342) and the guard base (1341) are connected by the limit hole (1341a) and the limit column (1342a); and a handle for convenient opening by the user is disposed on the side of the guard lid (1342) away from the limit column (1342a).

## Patentansprüche

1. Ein Elektroroller-Motorrad (100), umfassend
einen Rahmen (11);
eine Lenkanordnung (15), die zumindest teilweise mit dem Rahmen (11) verbunden ist;
eine Verriegelungsanordnung (19), die zumindest teilweise an dem Rahmen (11) montiert ist;
eine Fahrzeugabdeckung (13), die zumindest teilweise mit dem Rahmen (11) verbunden ist;
einen Fahrzeugcontroller (18), der zumindest teilweise mit der Verriegelungsanordnung (19) verbunden ist;
eine Sitzkissenanordnung (16), die zumindest teilweise mit dem Rahmen (11) verbunden ist;
eine Radanordnung (12), die zumindest teilweise mit dem Rahmen (11) verbunden ist;
eine Antriebseinheit (17) zum Antreiben der Radanordnung (12), wobei die Antriebseinheit (17) einen Antriebsmotor (172) umfasst;
eine Antriebsbatterie zur Versorgung des Antriebsmotors (172) mit elektrischer Energie;
wobei
die Antriebseinheit (17) Folgendes umfasst:
eine Antriebssteuereinheit (173), die elektrisch mit dem Antriebsmotor (172) gekoppelt ist und zur Steuerung des Antriebsmotors (172) dient;
einen Antriebsstrang (174), der zumindest teilweise mit dem Antriebsmotor (172) verbunden ist, um die Drehzahl zu verringern und das vom Antriebsmotor (172) abgegebene Drehmoment zu erhöhen; und
ein Gehäuse (171), das mindestens einen Aufnahmeraum definiert, welcher eine erste Kammer (1713) und eine zweite Kammer (1711) umfasst, die auf derselben Seite des Gehäuses (171) ausgebildet sind, sowie eine dritte Kammer (1712), die auf der anderen Seite des Gehäuses (171) ausgebildet ist; wobei sich der Antriebsmotor (172), die Antriebssteuereinheit (173) und der Antriebsstrang (174) zumindest teilweise innerhalb des Aufnahmeraums befinden und sich in eine zweite Richtung erstrecken, die im Wesentlichen parallel zur Vorder-Hinter-Richtung des Elektroroller-Motorrads (100) verläuft,
**dadurch gekennzeichnet, dass**
das Verhältnis einer Länge (L1) der Antriebseinheit (17) in der zweiten Richtung zu der Länge (L2) des Elektroroller-Motorrads (100) in der Vorder-Hinter-Richtung im Bereich von 0,22 bis 0,33 liegt;
die Drehzahl des Antriebsmotors (172) im Bereich von 9000 U/min bis 12000 U/min liegt; und
das Übersetzungsverhältnis des Antriebsstrangs (174) im Bereich von 9 bis 12 liegt.

2. Das Elektroroller-Motorrad (100) nach Anspruch 1, wobei ein erstes Durchgangsloch (1714) zwischen der zweiten Kammer (1711) und der dritten Kammer (1712) ausgebildet ist und ein zweites Durchgangsloch (1715) zwischen der zweiten Kammer (1711) und der ersten Kammer (1713) ausgebildet ist; der Antriebsmotor (172) ist über das zweite Durchgangsloch (1715) elektrisch mit der Antriebssteuereinheit (173) gekoppelt, der Antriebsmotor (172) umfasst eine erste Abtriebswelle (1721), und der Antriebsstrang (174) umfasst ein erstes Eingangsende (1741); die erste Abtriebswelle (1721) ist über das erste Durchgangsloch (1714) teilweise mit dem ersten Eingangsende (1741) verbunden.

3. Das Elektroroller-Motorrad (100) nach Anspruch 1, wobei die Antriebseinheit (17) ferner eine erste Abdeckplatte (1716) umfasst, die an der Seite befestigt ist, an der sich die erste Kammer (1713) befindet, eine zweite Abdeckplatte (1717), die an der Seite befestigt ist, an der sich die zweite Kammer (1711) befindet, und eine dritte Abdeckplatte (1718), die an der Seite befestigt ist, an der sich die dritte Kammer (1712) befindet; die erste Abdeckplatte (1716) und das Gehäuse (171) definieren gemeinsam einen ersten im Wesentlichen geschlossenen Raum, in dem die Antriebssteuereinheit (173) zumindest teilweise enthalten ist; die zweite Abdeckplatte (1717) und das Gehäuse (171) definieren gemeinsam einen zweiten im Wesentlichen geschlossenen Raum, in dem der Antriebsmotor (172) zumindest teilweise enthalten ist; und die dritte Abdeckplatte (1718) und das Gehäuse (171) definieren gemeinsam einen dritten im Wesentlichen geschlossenen Raum, in dem der Antriebsstrang (174) zumindest teilweise enthalten ist.

4. Das Elektroroller-Motorrad (100) nach Anspruch 1, wobei die Lenkanordnung (15) eine Lenksäule (152) umfasst und eine Verriegelungsöffnung (1921) an der Lenksäule (152) ausgebildet ist; die Verriegelungsanordnung (19) ist konfiguriert, ein Fahrzeugsperrsignal zu empfangen und das Elektroroller-Motorrad (100) basierend auf dem Fahrzeugsperrsignal zu verriegeln oder zu entriegeln; wenn sich die Verriegelungsanordnung (19) in einem abnormen Verriegelungs- oder Entriegelungszustand befindet, überträgt die Verriegelungsanordnung (19) entsprechende abnorme Verriegelungs- oder Entriegelungssignale an den Fahrzeugcontroller (18), der Fahrzeugcontroller (18) veranlasst das Elektroroller-Motorrad (100), nach Empfang der abnormen Verriegelungs- oder Entriegelungssignale eine Warnmeldung zu senden; die Verriegelungsanordnung (19) umfasst eine Fahrzeugsperrvorrichtung (191) und eine Lenksäulensperrvorrichtung (192), wobei die Fahrzeugsperrvorrichtung (191) konfiguriert ist, das Fahrzeugsperrsignal eines Benutzers zu empfangen und es an die Lenksäulensperrvorrichtung (192) zu übertragen, und die Lenksäulensperrvorrichtung (192) die Verriegelungs- oder Entriegelungsoperation basierend auf dem Fahrzeugsperrsignal durchführt; die Lenksäulensperrvorrichtung (192) umfasst eine Sperrzunge (1922), einen Sperrmotor (1923) zur Steuerung der Bewegung der Sperrzunge (1922), ein Sperrmotorsteuerungsmodul (1924) zur Steuerung der Bewegung des Sperrmotors (1923), und einen ersten Sensor (1924d) zur Feststellung, ob sich die Sperrzunge (1922) in ausgefahrener Position befindet; wenn sich die Sperrzunge (1922) in ausgefahrener Position befindet, ragt zumindest ein Teil der Sperrzunge (1922) durch die Verriegelungsöffnung (1921) und tritt in die Lenksäule (152) ein, wodurch sich die Lenksäule (152) in einem verriegelten Zustand befindet; die Fahrzeugsperrvorrichtung (191) ist elektrisch mit dem Sperrmotorsteuerungsmodul (1924) gekoppelt und überträgt das Fahrzeugsperrsignal an das Sperrmotorsteuerungsmodul (1924), wobei das Fahrzeugsperrsignal ein Verriegelungssignal und ein Entriegelungssignal umfasst.

5. Das Elektroroller-Motorrad (100) nach Anspruch 4, wobei der erste Sensor (1924d) ein Hallsensor ist; der erste Sensor (1924d) bestimmt, ob die Sperrzunge (1922) durch die Verriegelungsöffnung (1921) in die Lenksäule (152) eindringt, und gibt das Ergebnis an den Fahrzeugcontroller (18) zurück; nachdem die Lenksäulensperrvorrichtung (192) das Verriegelungssignal von der Fahrzeugsperrvorrichtung (191) empfangen hat, wenn der erste Sensor (1924d) bestimmt, dass zumindest ein Teil der Sperrzunge (1922) in die Verriegelungsöffnung (1921) der Lenksäule (152) eindringt, sendet eine Signalrückführungseinheit (1924c) ein Signal an den Fahrzeugcontroller (18), das anzeigt, dass die Lenksäulensperrvorrichtung (192) ordnungsgemäß verriegelt ist; wenn der erste Sensor (1924d) bestimmt, dass die Sperrzunge (1922) nicht in die Verriegelungsöffnung (1921) eindringt, sendet die Signalrückführungseinheit (1924c) ein Signal an den Fahrzeugcontroller (18), das anzeigt, dass die Lenksäulensperrvorrichtung (192) nicht ordnungsgemäß verriegelt ist; der Fahrzeugcontroller (18) veranlasst das Elektroroller-Motorrad (100), eine Warnmeldung zu senden.

6. Das Elektroroller-Motorrad (100) nach Anspruch 4, wobei das Sperrmotorsteuerungsmodul (1924) eine Signaleinheit (1924a), eine Motorsteuereinheit und eine Signalrückführungseinheit (1924c) umfasst; die Signaleinheit (1924a) ist elektrisch mit der Fahrzeugsperrvorrichtung (191) gekoppelt, um das Fahrzeugsperrsignal von der Fahrzeugsperrvorrichtung (191) zu empfangen, und ist ebenfalls elektrisch mit dem Fahrzeugcontroller (18) gekoppelt, um ein Fahrgeschwindigkeitssignal und ein Motordrehzahlsignal des Elektroroller-Motorrads (100) zu empfangen; das Sperrmotorsteuerungsmodul (1924) ist elektrisch mit der Signaleinheit (1924a) gekoppelt und in der Lage, basierend auf dem Fahrzeugsperrsignal, dem Fahrgeschwindigkeitssignal und dem Motordrehzahlsignal zu bestimmen, ob der Sperrmotor (1923) angetrieben werden soll, um die Sperrzunge (1922) auszufahren und die Lenksäule (152) zu verriegeln; wenn das Fahrzeugsperrsignal das Verriegelungssignal ist und die Fahrgeschwindigkeit und Motordrehzahl Null sind, ist das Sperrmotorsteuerungsmodul (1924) in der Lage, den Sperrmotor (1923) so zu steuern, dass die Sperrzunge (1922) zumindest teilweise ausgefahren wird und die Lenksäule (152) verriegelt.

7. Das Elektroroller-Motorrad (100) nach Anspruch 6, wobei wenn die Fahrgeschwindigkeit größer als Null oder die Motordrehzahl größer als Null ist, ist das Sperrmotorsteuerungsmodul (1924) in der Lage, den Sperrmotor (1923) so zu steuern, dass er seine Arbeit stoppt und sich die Sperrzunge (1922) vollständig außerhalb der Lenksäule (152) befindet.

8. Das Elektroroller-Motorrad (100) nach Anspruch 1, ferner umfassend eine Energieverteilungseinheit (177), die einen ersten Typ von Endanschluss (1771), einen zweiten Typ von Endanschluss (1772), einen Kabelbaum, eine Kabelbaumführungsvorrichtung (1778) zur Führung des Kabelbaums und eine Kabelbaumbefestigungsvorrichtung (1779) zur Befestigung des Kabelbaums umfasst, wobei der Kabelbaum einen Hochspannungskabelbaum und einen Niederspannungskabelbaum umfasst, wobei ein Ende des Hochspannungskabelbaums elektrisch mit dem Endanschluss ersten Typs (1771) gekoppelt ist und das andere Ende des Hochspannungskabelbaums elektrisch mit dem Endanschluss zweiten Typs (1772) gekoppelt ist; die Kabelbaumbefestigungsvorrichtung (1779) umfasst eine Kabelbaumbefestigungsvorrichtung ersten Typs (1779a) zur Befestigung des Hochspannungskabelbaums und eine Kabelbaumbefestigungsvorrichtung zweiten Typs (1779b) zur Befestigung des Niederspannungskabelbaums, wobei zumindest ein Teil der Kabelbaumbefestigungsvorrichtung zweiten Typs (1779b) mit einer Seite der Kabelbaumführungsvorrichtung (1778) verbunden ist; der Endanschluss ersten Typs (1771) ist mit dem Verkabelungsanschluss der Antriebssteuereinheit (173) verbunden und der Endanschluss zweiten Typs (1772) ist elektrisch mit der Antriebsbatterie gekoppelt; der Endanschluss ersten Typs (1771) umfasst einen ersten Endanschluss (1771a), einen zweiten Endanschluss (1771b) und einen dritten Endanschluss (1771c), die jeweils mit den Verkabelungsanschlüssen verbunden sind; der erste Endanschluss (1771a) dient der Hochspannungsstromversorgung, der zweite Endanschluss (1771b) dient dem Steuersignal, und der dritte Endanschluss (1771c) dient der DC-DC-Schaltung, wobei der zweite Endanschluss (1771b) und der dritte Endanschluss (1771c) sich auf derselben Seite des ersten Endanschlusses (1771a) befinden; der Endanschluss zweiten Typs (1772) umfasst einen vierten Endanschluss (1772a), der mit der Antriebsbatterie verbunden ist, wobei der vierte Endanschluss (1772a) der Antriebsbatterie dient; der Hochspannungskabelbaum umfasst eine Hochspannungsleitung (1773), und der Niederspannungskabelbaum umfasst eine Steuersignalleitung (1774), eine DC-DC-Wandlungsleitung (1775), eine Ladeleitung (1776) und eine Leistungssteuerungsleitung (1777); ein Ende der Hochspannungsleitung (1773) ist elektrisch mit dem ersten Endanschluss (1771a) gekoppelt und das andere Ende ist elektrisch mit dem vierten Endanschluss (1772a) gekoppelt, ein Ende der Steuersignalleitung (1774) ist elektrisch mit dem zweiten Endanschluss (1771b) gekoppelt und das andere Ende ist elektrisch mit dem Fahrzeugcontroller (18) gekoppelt, ein Ende der DC-DC-Wandlungsleitung (1775) ist elektrisch mit dem dritten Endanschluss (17711c) gekoppelt und das andere Ende der DC-DC-Wandlungsleitung (1775) ist elektrisch mit Niederspannungsgeräten oder einer Niederspannungsstromversorgung gekoppelt.

9. Das Elektroroller-Motorrad (100) nach Anspruch 8, wobei der Endanschluss ersten Typs (1731) einen ersten Endanschluss (1731), einen zweiten Endanschluss (1731) und einen dritten Endanschluss (1731) umfasst, die jeweils mit den Verkabelungsanschlüssen verbunden sind; der erste Endanschluss (1731) dient der Hochspannungsstromversorgung, der zweite Endanschluss (1731) dient dem Steuersignal, und der dritte Endanschluss (1731) dient der DC-DC-Schaltung, wobei sich der zweite und dritte Endanschluss (1731) auf derselben Seite wie der erste Endanschluss (1731) befinden; der Endanschluss zweiten Typs (1731) umfasst einen vierten Endanschluss (1731), der mit der Antriebsbatterie verbunden ist und der Antriebsbatterie dient.

10. Das Elektroroller-Motorrad (100) nach Anspruch 1, wobei die Antriebseinheit (17) eine Abdeckplatte (1718) umfasst und das Gehäuse (171) sowie die Abdeckplatte (1718) gemeinsam einen Aufnahmeraum definieren, wobei der Antriebsstrang (174) zumindest teilweise in dem Aufnahmeraum angeordnet und zumindest teilweise mit der Radanordnung (12) verbunden ist, wobei das Gehäuse (171) und die Abdeckplatte (1718) miteinander verbunden sind; wobei auf der Abdeckplatte (1718) mindestens zwei Bremssattel-Befestigungslöcher (1718a) zur Montage von Bremssätteln (1718e) vorgesehen sind und zwischen den Bremssattel-Befestigungslöchern (1718a) mindestens ein Befestigungselement zur Befestigung des Gehäuses (171) mit der Abdeckplatte (1718) vorgesehen ist, wobei ein Ende des Befestigungselements im Wesentlichen innerhalb der Abdeckplatte (1718) angeordnet ist; die Bremssättel (1718e) sind mit der Abdeckplatte (1718) verbunden und befinden sich auf der vom Gehäuse (171) abgewandten Seite der Abdeckplatte (1718).

11. Das Elektroroller-Motorrad (100) nach Anspruch 1, wobei der Rahmen (11) einen Vorderrahmen (111), einen Mittelrahmen (112) und einen Hinterrahmen (113) umfasst; der Mittelrahmen (112) ist U-förmig und umfasst zwei symmetrische Längsrohre (1121a, 1121b), wobei jedes Längsrohr (1121a, 1121b) ein Seitenrohr (1121c, 1121e) und ein hinteres Trägerrohr (1121d, 1121f) umfasst, wobei eine Seitenrohr-Verstärkungsplatte (1122) auf der Oberseite des Seitenrohrs (1121c, 1121e) angebracht ist und ein Zubehör-Montagesitz an der Außenseite des Seitenrohrs (1121c, 1121e) montiert ist, wobei eine Motormontageplatte (1126) am hinteren Trägerrohr (1121d, 1121f) vorgesehen ist, wobei eine Verstärkungsplatte an der Verbindung zwischen dem Seitenrohr (1121c, 1121e) und dem hinteren Trägerrohr (1121d, 1121f) angebracht ist; wobei die Schweißnaht zwischen der Seitenrohr-Verstärkungsplatte (1122) und dem Seitenrohr (1121c, 1121e) im Wesentlichen entlang des Seitenrohrs (1121c, 1121e) verläuft, die Schweißnaht zwischen dem Zubehör-Montagesitz und dem Seitenrohr (1121c, 1121e) im Wesentlichen entlang des Seitenrohrs (1121c, 1121e) verläuft, und die Schweißnaht zwischen der Motormontageplatte (1126) und dem hinteren Trägerrohr (1121d, 1121f) im Wesentlichen entlang des hinteren Trägerrohrs (1121d, 1121f) verläuft; wobei die Motormontageplatte (1126) eine erste Montageplatte (1126a) und eine zweite Montageplatte (1126d) umfasst, wobei die erste Montageplatte (1126a) einen ersten Montageabschnitt (1126b) und einen ersten Erweiterungsabschnitt (1126c) umfasst; wobei die zweite Montageplatte (1126d) einen zweiten Montageabschnitt (1126e) und einen zweiten Erweiterungsabschnitt (1126f) umfasst; wobei der zweite Montageabschnitt (1126e) an einer Seite des ersten Montageabschnitts (1126b) anliegt; wobei der erste Erweiterungsabschnitt (1126c) eine gebogene Fläche ist, die zu einer Seite des hinteren Trägerrohrs (1121d, 1121f) passt, und der erste Erweiterungsabschnitt (1126c) durch Schweißen an einer Seite des hinteren Trägerrohrs (1121d, 1121f) befestigt ist; wobei der zweite Erweiterungsabschnitt (1126f) eine gebogene Fläche ist, die zur anderen Seite des hinteren Trägerrohrs (1121d, 1121f) passt, und der zweite Erweiterungsabschnitt (1126f) durch Schweißen an der anderen Seite des hinteren Trägerrohrs (1121d, 1121f) befestigt ist; wobei der erste Erweiterungsabschnitt (1126c) und der zweite Erweiterungsabschnitt (1126f) gemeinsam eine V-förmige Struktur entlang des hinteren Trägerrohrs (1121d, 1121f) bilden.

12. Das Elektroroller-Motorrad (100) nach Anspruch 1, wobei die Radanordnung (12) ferner ein Hinterrad (122) und eine Radabdeckung (123) umfasst, wobei die Radabdeckung (123) zumindest einen Teil des Hinterrads (122) umgibt und sich auf einer Seite des Hinterrads (122) befindet; wobei eine Kugellaufbahn (1231) auf einer Seite der Radabdeckung (123) angeordnet ist und ein Kugelzapfen (1221) auf der Seite des Hinterrads (122) angeordnet ist, die mit der Radabdeckung (123) in Kontakt steht, wobei die Kugellaufbahn (1231) und der Kugelzapfen (1221) aufeinander abgestimmt sind, um die Radabdeckung (123) auf einer Seite des Hinterrads (122) zu befestigen, wobei der Kugelzapfen (1221) an der Radnabe (1222), Felge (1223) oder Speiche (1224) des Hinterrads (122) angeordnet ist; wobei die Kugellaufbahn (1231) eine Öffnung definiert, die kleiner ist als der Durchmesser des Kugelzapfens (1221), und ein Innenmaß aufweist, das größer oder gleich dem Durchmesser des Kugelzapfens (1221) ist.

13. Das Elektroroller-Motorrad (100) nach Anspruch 1, ferner umfassend
ein Staufachlicht (142), das zumindest teilweise innerhalb der Sitzkissenanordnung (16) montiert ist;
wobei die Sitzkissenanordnung (16) ein Sitzkissen (161), ein unter dem Sitzkissen (161) angeordnetes Staufach (162) und ein Sitzkissenverriegelungselement (163) umfasst, das das Sitzkissen (161) und das Staufach (162) miteinander verriegelt; wobei das Sitzkissenverriegelungselement (163) ein elektronisches Schloss (1631) und eine elektronische Schlossantriebsvorrichtung (1632) umfasst, die das elektronische Schloss (1631) zum Verriegeln oder Entriegeln des Sitzkissens (161) antreibt;
wobei das Sitzkissenverriegelungselement (163) ferner einen ersten Schalter (1633) umfasst, der leitend ist, wenn das elektronische Schloss (1631) entriegelt ist, und das Staufachlicht (142) elektrisch mit dem ersten Schalter (1633) gekoppelt ist und eingeschaltet wird, wenn der erste Schalter (1633) leitend ist; wobei das Staufachlicht (142) ferner in Reihe mit einer ersten Stromquelle geschaltet ist, die das Staufachlicht (142) mit elektrischer Energie versorgt.

14. Das Elektroroller-Motorrad (100) nach Anspruch 13, wobei wenn die elektronische Schlossantriebsvorrichtung (1632) das elektronische Schloss (1631) entriegelt, der erste Schalter (1633) leitend zur Masse ist; wenn der erste Schalter (1633) leitend zur Masse ist, ist das Staufachlicht (142) leitend.

15. Das Elektroroller-Motorrad (100) nach Anspruch 13, wobei ein USB-Anschluss im Staufach (162) angeordnet ist, eine Schutzeinheit (134) zum Schutz des USB-Anschlusses vorgesehen ist, wobei die Schutzeinheit (134) eine Schutzbasis (1341) zur Aufnahme des USB-Anschlusses und einen Schutzdeckel (1342) zum Abdecken des USB-Anschlusses umfasst; wobei die Schutzbasis (1341) fest über den USB-Anschluss gestülpt ist; wobei auf der Außenseite der Seitenwand der Schutzbasis (1341) eine Buchsenaufnahme vorgesehen ist und auf der Innenseite der Seitenwand des Schutzdeckels (1342) ein mit der Buchsenaufnahme korrespondierendes Steckverbindungselement vorgesehen ist; wobei die Schutzbasis (1341) ein Begrenzungsloch (1341a) definiert und am Schutzdeckel (1342) eine mit dem Begrenzungsloch (1341a) korrespondierende Begrenzungssäule (1342a) vorgesehen ist; wobei an einem Ende der Begrenzungssäule (1342a) ein Auszugsschutz vorgesehen ist; wobei der Schutzdeckel (1342) und die Schutzbasis (1341) über das Begrenzungsloch (1341a) und die Begrenzungssäule (1342a) miteinander verbunden sind; und wobei auf der vom Begrenzungssäulenende (1342a) abgewandten Seite des Schutzdeckels (1342) ein Griff zur bequemen Öffnung durch den Benutzer angeordnet ist.

## Revendications

1. Un motocycle de type scooter électrique (100), comprenant
un cadre (11) ;
un ensemble de direction (15) relié au moins partiellement au cadre (11) ;
un ensemble de verrouillage (19) monté au moins partiellement sur le cadre (11) ;
un carénage de véhicule (13) relié au moins partiellement au cadre (11) ;
un contrôleur de véhicule (18) relié au moins partiellement à l'ensemble de verrouillage (19) ;
un ensemble de coussin de siège (16) relié au moins partiellement au cadre (11);
un ensemble de roue (12) relié au moins partiellement au cadre (11) ;
un ensemble d'entraînement (17) destiné à entraîner l'ensemble de roue (12), l'ensemble d'entraînement (17) comprenant un moteur d'entraînement (172) ;
une batterie de puissance destinée à alimenter électriquement le moteur d'entraînement (172) ;
dans lequel
l'ensemble d'entraînement (17) comprend :
une unité de commande d'entraînement (173) couplée électriquement au moteur d'entraînement (172) pour commander le moteur d'entraînement (172) ;
une chaîne cinématique d'entraînement (174) reliée au moins partiellement au moteur d'entraînement (172) pour réduire la vitesse de rotation et augmenter le couple de la puissance délivrée par le moteur d'entraînement (172) ;
et un boîtier (171) définissant au moins un espace de logement comprenant une première chambre (1713) et une deuxième chambre (1711) définies du même côté du boîtier (171), et une troisième chambre (1712) définie de l'autre côté du boîtier (171); le moteur d'entraînement (172), l'unité de commande d'entraînement (173) et la chaîne cinématique d'entraînement (174) étant au moins partiellement situés dans l'espace de logement et s'étendant dans une deuxième direction sensiblement parallèle à une direction avant-arrière du motocycle de type scooter électrique (100),
**caractérisé en ce que**
le rapport d'une longueur (L1) de l'ensemble d'entraînement (17) s'étendant dans la deuxième direction à la longueur (L2) du motocycle de type scooter électrique (100) s'étendant dans la direction avant-arrière est compris entre 0,22 et 0,33 ;
la vitesse de rotation du moteur d'entraînement (172) est comprise entre 9000 tr/min et 12000 tr/min ;
et le rapport de transmission de la chaîne cinématique d'entraînement (174) est compris entre 9 et 12.

2. Le motocycle de type scooter électrique (100) selon la revendication 1, dans lequel un premier trou traversant (1714) est défini entre la deuxième chambre (1711) et la troisième chambre (1712), et un second trou traversant (1715) est défini entre la deuxième chambre (1711) et la première chambre (1713) ; le moteur d'entraînement (172) est couplé électriquement à l'unité de commande d'entraînement (173) par le second trou traversant (1715), le moteur d'entraînement (172) comprend un premier arbre de sortie (1721), et la chaîne cinématique d'entraînement (174) comprend une première extrémité d'entrée (1741) ; le premier arbre de sortie (1721) est partiellement relié à la première extrémité d'entrée (1741) par le premier trou traversant (1714).

3. Le motocycle de type scooter électrique (100) selon la revendication 1, dans lequel l'ensemble d'entraînement (17) comprend en outre une première plaque de recouvrement (1716) fixée du côté où se trouve la première chambre (1713), une deuxième plaque de recouvrement (1717) fixée du côté où se trouve la deuxième chambre (1711), et une troisième plaque de recouvrement (1718) fixée du côté où se trouve la troisième chambre (1712) ; la première plaque de recouvrement (1716) et le boîtier (171) définissent ensemble un premier espace sensiblement fermé dans lequel l'unité de commande d'entraînement (173) est au moins partiellement contenue ; la deuxième plaque de recouvrement (1717) et le boîtier (171) définissent ensemble un deuxième espace sensiblement fermé dans lequel le moteur d'entraînement (172) est au moins partiellement contenu ; et la troisième plaque de recouvrement (1718) et le boîtier (171) définissent ensemble un troisième espace sensiblement fermé dans lequel la chaîne cinématique d'entraînement (174) est au moins partiellement contenue.

4. Le motocycle de type scooter électrique (100) selon la revendication 1, dans lequel l'ensemble de direction (15) comprend une colonne de direction (152) et un orifice de verrouillage (1921) est défini sur la colonne de direction (152) ; l'ensemble de verrouillage (19) est apte à recevoir un signal de verrouillage du véhicule et à verrouiller ou déverrouiller le motocycle de type scooter électrique (100) en fonction du signal de verrouillage du véhicule; lorsque l'ensemble de verrouillage (19) est dans un état de verrouillage ou de déverrouillage anormal, il transmet les signaux correspondants au contrôleur de véhicule (18), lequel commande au motocycle de type scooter électrique (100) d'émettre un message d'alerte ; l'ensemble de verrouillage (19) comprend un dispositif de verrouillage du véhicule (191) et un dispositif de verrouillage de la direction (192), le dispositif de verrouillage du véhicule (191) étant apte à recevoir le signal de verrouillage du véhicule d'un utilisateur et à le transmettre au dispositif de verrouillage de la direction (192), et le dispositif de verrouillage de la direction (192) effectuant les opérations de verrouillage ou de déverrouillage sur la base du signal de verrouillage du véhicule ; le dispositif de verrouillage de la direction (192) comprend une languette de verrouillage (1922), un moteur de verrouillage (1923) destiné à commander le mouvement de la languette de verrouillage (1922), un module de commande du moteur de verrouillage (1924) destiné à commander le moteur de verrouillage (1923), et un premier capteur (1924d) destiné à déterminer si la languette de verrouillage (1922) est en extension ; lorsque la languette de verrouillage (1922) est en extension, au moins une partie de la languette de verrouillage (1922) traverse l'orifice de verrouillage (1921) et entre dans la colonne de direction (152), mettant ainsi celle-ci en position verrouillée ; le dispositif de verrouillage du véhicule (191) est couplé électriquement au module de commande du moteur de verrouillage (1924) et lui transmet le signal de verrouillage du véhicule, le signal de verrouillage du véhicule comprend un signal de verrouillage et un signal de déverrouillage.

5. Le motocycle de type scooter électrique (100) selon la revendication 4, dans lequel le premier capteur (1924d) est un capteur à effet Hall ; le premier capteur (1924d) détermine si la languette de verrouillage (1922) pénètre dans la colonne de direction (152) par l'orifice de verrouillage (1921) et transmet le résultat au contrôleur de véhicule (18) ; après que le dispositif de verrouillage de la direction (192) a reçu le signal de verrouillage du dispositif de verrouillage du véhicule (191), si le premier capteur (1924d) détermine qu'au moins une partie de la languette de verrouillage (1922) pénètre dans l'orifice de verrouillage (1921) défini dans la colonne de direction (152), une unité de retour de signal (1924c) envoie un signal indiquant que le dispositif de verrouillage de la direction (192) est correctement verrouillé au contrôleur de véhicule (18) ; si le capteur détermine que la languette de verrouillage (1922) ne pénètre pas dans l'orifice de verrouillage (1921), alors l'unité de retour de signal (1924c) envoie un signal indiquant que le dispositif de verrouillage de la direction (192) n'est pas correctement verrouillé au contrôleur de véhicule (18) ; le contrôleur de véhicule (18) commande au motocycle de type scooter électrique (100) d'envoyer un message d'alerte.

6. Le motocycle de type scooter électrique (100) selon la revendication 4, dans lequel le module de commande du moteur de verrouillage (1924) comprend une unité de réception de signal (1924a), une unité de commande de moteur, et une unité de retour de signal (1924c) ; l'unité de réception de signal (1924a) est couplée électriquement au dispositif de verrouillage du véhicule (191) pour recevoir le signal de verrouillage du véhicule, et également au contrôleur de véhicule (18) pour obtenir un signal de vitesse du véhicule et un signal de vitesse de rotation du moteur ; le module de commande du moteur de verrouillage (1924) est couplé électriquement à l'unité de réception de signal (1924a) et est apte à déterminer s'il convient d'entraîner le moteur de verrouillage (1923) pour étendre la languette de verrouillage (1922) et verrouiller la colonne de direction (152) sur la base du signal de verrouillage du véhicule, du signal de vitesse du véhicule et du signal de vitesse de rotation du moteur ; lorsque le signal de verrouillage du véhicule est un signal de verrouillage et que la vitesse du véhicule et la vitesse du moteur sont nulles, le module de commande du moteur de verrouillage (1924) est apte à commander le moteur de verrouillage (1923) de sorte que la languette de verrouillage (1922) soit au moins partiellement étendue et verrouille la colonne de direction (152).

7. Le motocycle de type scooter électrique (100) selon la revendication 6, dans lequel lorsque la vitesse du véhicule est supérieure à zéro ou que la vitesse de rotation du moteur est supérieure à zéro, le module de commande du moteur de verrouillage (1924) est apte à commander le moteur de verrouillage (1923) pour qu'il cesse de fonctionner, de sorte que la languette de verrouillage (1922) soit entièrement à l'extérieur de la colonne de direction (152).

8. Le motocycle de type scooter électrique (100) selon la revendication 1, comprenant en outre une unité de distribution d'énergie (177) comprenant un premier type de port de connexion de terminal (1771), un second type de port de connexion de terminal (1772), un faisceau de câblage, un dispositif de guidage du faisceau de câblage (1778) pour guider le faisceau de câblage, et un dispositif de fixation du faisceau de câblage (1779) pour fixer le faisceau de câblage, le faisceau de câblage comprenant un faisceau de câblage haute tension et un faisceau de câblage basse tension, une extrémité du faisceau de câblage haute tension étant couplée électriquement au premier type de port de connexion de terminal (1771), et l'autre extrémité étant couplée électriquement au second type de port de connexion de terminal (1772) ; le dispositif de fixation du faisceau de câblage (1779) comprend un premier type de dispositif de fixation de faisceau (1779a) pour fixer le faisceau haute tension et un second type de un dispositif de fixation de faisceau (1779b) pour fixer le faisceau basse tension, au moins une partie du second type de dispositif de fixation de faisceau (1779b) étant connectée à un côté du dispositif de guidage (1778) ; le premier type de port (1771) est connecté au terminal de câblage de l'unité de commande d'entraînement (173), et le second type de port (1772) est couplé électriquement à la batterie d'alimentation ; le premier type de port de connexion (1771) comprend un premier port (1771a) pour l'alimentation haute tension, un deuxième port (1771b) pour le signal de commande, et un troisième port (1771c) pour le circuit DC-DC, les deuxième et troisième ports (1771b, 1771c) étant situés du même côté que le premier port (1771a) ; le second type de port (1772) comprend un quatrième port (1772a) connecté à la batterie d'alimentation, et le quatrième port (1772a) est destiné à la batterie d'alimentation; le faisceau haute tension comprend une ligne d'alimentation haute tension (1773), et le faisceau basse tension comprend une ligne de signal de commande (1774), une ligne de conversion DC-DC (1775), une ligne de charge (1776) et une ligne de commande de puissance (1777) ; une extrémité de la ligne haute tension (1773) est couplée au premier port (1771a) et l'autre extrémité de la ligne haute tension (1773) est couplée au quatrième port (1772a), une extrémité de la ligne de commande (1774) est couplée au second port (1771b) et l'autre extrémité de la ligne de commande (1774) est couplée au contrôleur de véhicule (18), une extrémité de la ligne DC-DC (1775) est couplée au troisième port (1771c) et l'autre extrémité de la ligne DC-DC (1775) est couplée à des appareils basse tension ou à une alimentation basse tension.

9. Le motocycle de type scooter électrique (100) selon la revendication 8, dans lequel le premier type de port de connexion (1731) comprend un premier port (1731), un deuxième port (1731), et un troisième port (1731) respectivement connectés aux bornes ; le premier port (1731) est destiné à l'alimentation haute tension, le deuxième port (1731) au signal de commande, et le troisième port (1731) au circuit DC-DC, les deuxième et troisième ports (1731) étant situés du même côté que le premier port (1731) ; le second type de port (1731) comprend un quatrième port (1731) connecté à la batterie d'alimentation, ledit quatrième port (1731) étant destiné à la batterie d'alimentation.

10. Le motocycle de type scooter électrique (100) selon la revendication 1, dans lequel l'unité d'entraînement (17) comprend une plaque de recouvrement (1718), et le boîtier (171) et ladite plaque de recouvrement (1718) définissent ensemble un espace de logement, l'entraînement (174) étant au moins partiellement logé dans cet espace et au moins partiellement connecté à l'ensemble roue (12), le boîtier (171) et la plaque de recouvrement (1718) étant assemblés ; ladite plaque de recouvrement (1718) comprend au moins deux orifices de fixation d'étrier (1718a) pour le montage des étriers de frein (1718e), et au moins un élément de fixation est disposé entre lesdits orifices pour relier le boîtier (171) à la plaque de recouvrement (1718), une extrémité de l'élément de fixation étant située à l'intérieur de la plaque de recouvrement (1718) ; lesdits étriers de frein (1718e) sont connectés à la plaque de recouvrement (1718) et positionnés du côté de la plaque de recouvrement (1718) opposé au boîtier (171).

11. Le motocycle de type scooter électrique (100) selon la revendication 1, dans lequel le cadre (11) comprend un cadre avant (111), un cadre central (112) et un cadre arrière (113) ; le cadre central (112) est en forme de U et comprend deux tubes longitudinaux symétriques (1121a, 1121b), chaque tube longitudinal (1121a, 1121b) comprenant un tube latéral (1121c, 1121e) et un tube de support arrière (1121d, 1121f), une plaque de renfort de tube latéral (1122) étant montée sur la surface supérieure du tube latéral (1121c, 1121e) et un support de fixation d'accessoire étant monté sur le côté extérieur du tube latéral (1121c, 1121e), une plaque de fixation de moteur (1126) étant disposée sur le tube de support arrière (1121d, 1121f), une plaque de renfort étant disposée à la jonction entre le tube latéral (1121c, 1121e) et le tube de support arrière (1121d, 1121f) ; une soudure entre la plaque de renfort de tube latéral (1122) et le tube latéral (1121c, 1121e) s'étendant sensiblement le long du tube latéral (1121c, 1121e), une soudure entre le support de fixation d'accessoire et le tube latéral (1121c, 1121e) s'étendant sensiblement le long du tube latéral (1121c, 1121e), et une soudure entre la plaque de fixation de moteur (1126) et le tube de support arrière (1121d, 1121f) s'étendant sensiblement le long du tube de support arrière (1121d, 1121f) ; la plaque de fixation de moteur (1126) comprenant une première plaque de fixation (1126a) et une seconde plaque de fixation (1126d), la première plaque de fixation (1126a) comprenant une première partie de fixation (1126b) et une première partie d'extension (1126c), la seconde plaque de fixation (1126d) comprenant une seconde partie de fixation (1126e) et une seconde partie d'extension (1126f), la seconde partie de fixation (1126e) étant appliquée contre un côté de la première partie de fixation (1126b), la première partie d'extension (1126c) étant une surface courbe correspondant à un côté du tube de support arrière (1121d, 1121f) et étant enroulée et fixée par soudure sur un côté du tube de support arrière (1121d, 1121f), la seconde partie d'extension (1126f) étant une surface courbe correspondant à l'autre côté du tube de support arrière (1121d, 1121f) et étant enroulée et fixée par soudure sur l'autre côté du tube de support arrière (1121d, 1121f), la première partie d'extension (1126c) et la seconde partie d'extension (1126f) définissant ensemble une structure en forme de V le long du tube de support arrière (1121d, 1121f).

12. Le motocycle de type scooter électrique (100) selon la revendication 1, dans lequel l'ensemble roue (12) comprend en outre une roue arrière (122) et un carter de roue (123), le carter de roue (123) entourant au moins une partie de la roue arrière (122) et étant situé sur un côté de la roue arrière (122) ; une piste à billes (1231) est disposée sur un côté du carter de roue (123) et un goujon à bille (1221) est disposé sur le côté de la roue arrière (122) en contact avec le carter de roue (123), la piste à billes (1231) et le goujon à bille (1221) coopérant pour fixer le carter de roue (123) sur un côté de la roue arrière (122), le goujon à bille (1221) étant disposé sur le moyeu de roue (1222), la jante (1223) ou un rayon (1224) de la roue arrière (122) ; la piste à billes (1231) définissant une ouverture de diamètre inférieur à celui du goujon à bille (1221) et présentant une dimension interne supérieure ou égale au diamètre du goujon à bille (1221).

13. Le motocycle de type scooter électrique (100) selon la revendication 1, comprenant en outre
une lampe de coffre de rangement (142) montée au moins partiellement dans l'ensemble de coussin de siège (16) ;
dans lequel l'ensemble de coussin de siège (16) comprend un coussin de siège (161), un coffre de rangement (162) situé sous le coussin de siège (161), et un dispositif de verrouillage de coussin de siège (163) permettant de verrouiller le coussin de siège (161) et le coffre de rangement (162) ensemble ; le dispositif de verrouillage de coussin de siège (163) comprend une serrure électronique (1631) et un dispositif d'actionnement de serrure électronique (1632) pour entraîner la serrure électronique (1631) à verrouiller ou déverrouiller le coussin de siège (161);
le dispositif de verrouillage de coussin de siège (163) comprend en outre un premier interrupteur (1633) qui est conducteur lorsque la serrure électronique (1631) est déverrouillée, et la lampe de coffre de rangement (142) est électriquement couplée au premier interrupteur (1633) et est allumée lorsque le premier interrupteur (1633) est conducteur ; la lampe de coffre de rangement (142) est en outre connectée en série à une première source d'alimentation qui fournit de l'énergie électrique à la lampe de coffre de rangement (142).

14. Le motocycle de type scooter électrique (100) selon la revendication 13, dans lequel lorsque le dispositif d'actionnement de serrure électronique (1632) déverrouille la serrure électronique (1631), le premier interrupteur (1633) est conducteur à la masse ; lorsque le premier interrupteur (1633) est conducteur à la masse, la lampe de coffre de rangement (142) est conductrice.

15. Le motocycle de type scooter électrique (100) selon la revendication 13, dans lequel un port USB est disposé à l'intérieur du coffre de rangement (162), un ensemble de protection (134) est prévu pour protéger le port USB, l'ensemble de protection (134) comprend une base de protection (1341) pour recevoir le port USB et un couvercle de protection (1342) recouvrant le port USB ; la base de protection (1341) est fixée de manière ajustée sur le port USB ; un réceptacle de boucle femelle est disposé sur le côté extérieur de la paroi latérale de la base de protection (1341) et un connecteur de boucle mâle adapté au réceptacle de boucle femelle est disposé sur le côté intérieur de la paroi latérale du couvercle de protection (1342) ; la base de protection (1341) définit un trou de limitation (1341a), et une colonne de limitation (1342a) adaptée au trou de limitation (1341a) est disposée sur le couvercle de protection (1342) ; un élément anti-arrachement est disposé à l'extrémité de la colonne de limitation (1342a) ; le couvercle de protection (1342) et la base de protection (1341) sont reliés par le trou de limitation (1341a) et la colonne de limitation (1342a) ; et une poignée permettant une ouverture aisée par l'utilisateur est disposée sur le côté du couvercle de protection (1342) opposé à la colonne de limitation (1342a).
